# EUROPEAN PATENT SPECIFICATION

(11) **EP 3 383 111 B1**
(45) Date of publication and mention of the grant of the patent: **28.01.2026**
(21) Application number: 16878846.1
(22) Date of filing: 22.12.2016
(51) Int. Cl.: H04L 1/18, H04W 72/04, H04W 28/06, H04W 72/12

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL UTILISATEUR, STATION DE BASE SANS FIL ET PROCÉDÉ DE COMMUNICATION SANS FIL

(30) Priority: 25.12.2015 JP 2015255029
(43) Date of publication of application: 03.10.2018
(73) Proprietor: NTT DOCOMO, INC., Chiyoda-ku Tokyo 100-6150 (JP)
(72) Inventor: TAKEDA, Kazuki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2016/088263
(87) International publication number: WO 2017/110959

(56) References cited:
- WO-A1-2015/108008
- WO-A1-2015/115804
- KR-A- 20150 089 715
- US-A1- 2016 338 049
- MOTOROLA: "UCI Multiplexing on PUSCH in UL-MIMO Transmissions", 3GPP DRAFT; R1-104216 UCI MULTIPLEXING ON PUSCH (FINAL CLEAN), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 5 July 2010 (2010-07-05), XP050449623
- ERICSSON: "Evaluation methodology for latency reduction Techniques", 3GPP TSG-RAN WG1#83 RL-157145, 22 November 2015 (2015-11-22), pages 1 - 6, XP051040021, Retrieved from the Internet <URL:http://www.3gpp.org/ftp/tsg_ran/WG1_RL1/TSGR1_83/Docs/R1-157145.zip>
- HUAWEI: "HiSilicon, Views on TTI length", 3GPP TSG-RAN WG1#83 RL-156459, 22 November 2015 (2015-11-22), pages 1 - 5, XP051002919, Retrieved from the Internet <URL:http://www.3gpp.org/ftp/tsg_ran/WG1_RL1/TSGR1_83/Docs/Rl-156459.zip>
- ZTE: "L1 considerations on latency reduction", 3GPP TSG-RAN WG1#83 RL-157151, 22 November 2015 (2015-11-22), pages 1 - 6, XP051003410, Retrieved from the Internet <URL:http://www.3gpp.org/ftp/tsg_ran/WG1_RL1/TSGR1_83/Docs/R1-157151.zip>
- "UL aspects of TTI shortening", 3GPP TSG-RAN WG1#84 R1- 160965, 19 February 2016 (2016-02-19), pages 1 - 3, XP051054272, Retrieved from the Internet <URL:http://www.3gpp.org/ftp/tsg_ran/WG1_RL1/TSGR1_84/Docs/R1-160965.zip>

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, the specifications of LTE-A (also referred to as "LTE-advanced," "LTE Rel. 10," "Rel. 11" or "Rel. 12," etc.) have been drafted for further broadbandization and increased speed beyond LTE (also referred to as "LTE Rel. 8" or "Rel. 9"), and successor systems of LTE (also referred to as, for example, "FRA" (Future Radio Access), "5G" (5th generation mobile communication system), "LTE Rel. 13," "Rel. 14," and so on) are under study.

Carrier aggregation (CA) to integrate multiple component carriers (CC) is introduced in LTE Rel. 10/11 in order to achieve broadbandization. Each CC is configured with the system bandwidth of LTE Rel. 8 as one unit. In addition, in CA, multiple CCs under the same radio base station (eNB: eNodeB) are configured in a user terminal (UE: User Equipment).

Meanwhile, in LTE Rel. 12, dual connectivity (DC), in which multiple cell groups (CG) formed by different radio base stations are configured in a user terminal, is also introduced. Each cell group is comprised of at least one cell (CC). Since multiple CCs of different radio base stations are integrated in DC, DC is also referred to as "inter-eNB CA."

Also, in LTE Rel. 8 to 12, frequency division duplex (FDD), in which downlink (DL) transmission and uplink (UL) transmission are made in different frequency bands, and time division duplex (TDD), in which DL transmission and UL transmission are switched over time and made in the same frequency band, are introduced.

In above LTE Rel. 8 to 12, the transmission time intervals (TTIs) that are applied to DL transmission and UL transmission between radio base stations and user terminals are configured to one ms and controlled. TTIs in existing systems (LTE Rel. 8 to 12) are also referred to as "subframes," "subframe length," etc.

### Citation List

### Non-Patent Literature

Non-Patent Literature 1: 3GPP TS 36.300 Rel.8 Evolved Universal Terrestrial Radio Access (E-UTRA) and Evolved Universal Terrestrial Radio Access Network (E-UTRAN); Overall description; Stage 2"

WO 2015/108008 A1 has stated goals of improving throughput and supporting the use mode of various wireless communication systems when time division duplex (TDD) is used in an environment in which data traffic is biased to a downlink side. A user terminal is described for performing wireless communication with a TDD cell, wherein the user terminal is provided with: a transmission/reception unit for transmitting/receiving a signal using an uplink (UL)/downlink (DL) configuration which includes a special sub-frame configured from a downlink time interval, a guard period, and an uplink time interval, DL transmission being performed in all of the sub-frames of the UL/DL configuration; and a control unit for controlling the placement of an uplink demodulation reference signal on the basis of the length of the uplink time interval configuring the special sub-frame.

3GPP TDoc R1-104216 discusses UCI multiplexing on PUSCH in UL-MIMO transmissions. In particular, the document discusses Rank and HARQ-ACK symbol mapping on PUSCH, with HARQ-ACK multiplexed to the SC-OFDM symbols on either side of a DMRS, and rank indication multiplexed +/- 2 SC-OFDM symbols on either side of the DMRS.

KR 2015 0089715 A describes a method for transmitting uplink control information (UCI) through a physical uplink shared channel (PUSCH), which comprises the steps of: calculating Q'_ACK representing the number of coded modulation symbols for hybrid automatic repeat request-acknowledgement (HARQ-ACK) information transmitted on a sub-frame for the PUSCH transmission, and Q'_RI representing the number of coded modulation symbols for rank indicator (RI) information transmitted on the sub-frame; channel-coding the HARQ-ACK information and the RI information, respectively, based on the calculated Q'_ACK and Q'_RI to allocate the information to elements of an interleaving matrix for channel interleaving; and mapping at least one among the HARQ-ACK information and the RI information to an area for the PUSCH based on the interleaving matrix to generate the PUSCH. In consideration of the decreased DMRS mapping, UCI mapping can be more efficiently performed.

WO 2015/115804 A1 describes a method and terminal for transmitting uplink control information (UCI) through a physical uplink shared channel (PUSCH) and includes a code rate adjustment block calculating Q'ACK representing the number of coded modulation symbols related to HARQ-ACK information transmitted on a subframe for PUSCH transmission, and Q'RI representing the number of coded modulation symbols related to RI information transmitted on a subframe, wherein the code rate adjustment block calculates the Q'ACK based on variable nACK for controlling the number of SC-FDMA symbols to which HARQ-ACK information is mapped, and calculates the Q'RI based on variable nRI for controlling the number of SC-FDMA symbols becoming RI information.

### Summary of Invention

### Technical Problem

Meanwhile, future radio communication systems such as LTE after Rel. 13 and 5G are expected to communicate a relatively small amount of data in high frequency bands such as several tens of GHz, as in IoT (Internet of Things), MTC (Machine Type Communication), M2M (Machine To Machine) or the like is performed. When applying communication methods of existing systems (LTE Rel. 8 to 12) (such as one-ms transmission time intervals (TTIs)) to such a future radio communication system, there is a possibility that sufficient communication services cannot be provided.

Therefore, in future radio communication systems, it may be possible to make communication using TTIs (hereinafter referred to as "short TTIs") that are shorter than one-ms TTIs (hereinafter referred to as "normal TTIs"). The problem when using short TTIs is how to configure an uplink shared channel (PUSCH: Physical Uplink Shared Channel) to be transmitted in short TTIs.

The present invention has been made in view of the above, and it is therefore an object of the present invention to provide a user terminal, a radio base station, and a radio communication method that are capable of performing communication using an uplink shared channel having a configuration suitable for short TTIs.

### Solution to Problem

One aspect of the present invention provides a user terminal according to appended independent claim 1.

Another aspect of the present invention provides a radio base station according to appended independent claim 2.

### Advantageous Effects of Invention

According to the present invention, communication can be performed using an uplink shared channel having a configuration suitable for short TTI.

### Brief Description of Drawings

FIG. 1 is a diagram to show an example configuration of a normal TTI;
FIG. 2A and FIG. 2B are diagrams to show example configurations of short TTIs;
FIGs. 3A to 3C are diagrams to show example configurations of short TTIs;
FIGs. 4A to 4C are diagrams to show examples of PUSCH configurations with normal TTIs;
FIGs. 5A and 5B are diagrams to show examples PUSCH configurations with short TTIs, according to a first example;
FIGs. 6A and 6B are diagrams to show examples of DMRS multiplexing, according to the first example;
FIGs. 7A and 7B are diagrams to show a first example of DMRS mapping, according to the first example;
FIGs. 8A to 8C are diagrams to show a second example of DMRS mapping, according to the first example;
FIGs. 9A and 9B are diagrams to explain examples of combs according to the first example;
FIGs. 10A and 10B are diagrams to show other examples of PUSCH configurations with short TTIs, according to the first example;
FIGs. 11A and 11B are diagrams to show examples of PUSCH configurations with short TTIs, according to a second example;
FIG. 12 is a diagram to show a first example of mapping of UCI, according to the second example;
FIG. 13 is a diagram to show a second example of mapping of UCI, according to the second example;
FIGs. 14A and 14B are diagrams to show examples of PUSCH configurations with short TTIs, according to a third example;
FIG. 15 is a diagram to show an example of a schematic structure of a radio communication system according to the present embodiment;
FIG. 16 is a diagram to show an example of an overall structure of a radio base station according to present embodiment;
FIG. 17 is a diagram to show an example of a functional structure of a radio base station according to present embodiment;
FIG. 18 is a diagram to show an example of an overall structure of a user terminal according to present embodiment;
FIG. 19 is a diagram to show an example of a functional structure of a user terminal according to present embodiment; and
FIG. 20 is a diagram to show an example hardware structure of a radio base station and a user terminal according to the present embodiment.

### Description of Embodiments

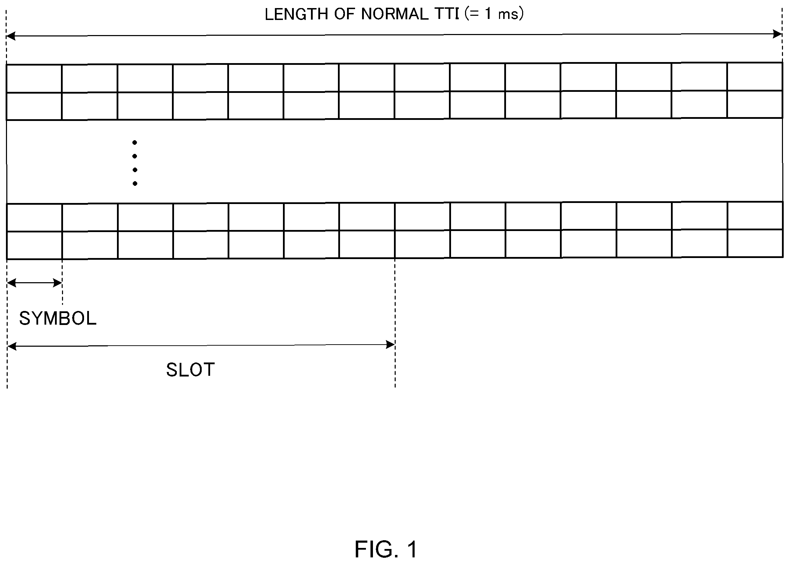

FIG. 1 is a diagram to show an example of a TTI (normal TTI) in existing systems (LTE Rel. 8 to 12). As shown in FIG. 1, a normal TTI has a time length of one ms. A normal TTI is also referred to as a "subframe," and is comprised of two time slots. In existing systems, a normal TTI is a transmission time unit of one channel-encoded data packet, and is the processing unit of scheduling and link adaptation.

As shown in FIG. 1, when a normal cyclic prefix (CP) is used in the downlink (DL), a normal TTI includes 14 OFDM (Orthogonal Frequency Division Multiplexing) symbols (seven OFDM symbols per slot). Each OFDM symbol has a time length (symbol length) of 66.7 µs, and a normal CP of 4.76 µs is appended. Since the symbol length and the subcarrier period are in reciprocal relationship to each other, the subcarrier period is 15 kHz when the symbol length 66.7 µs.

Also, when normal a cyclic prefix (CP) is used in the uplink (UL), a normal TTI is configured to include 14 SC-FDMA (Single Carrier Frequency Division Multiple Access) symbols (seven SC-FDMA symbols per slot). Each SC-FDMA symbol has a time length (symbol length) of 66.7 µs, and a normal CP of 4.76 µs is appended. Since the symbol length and the subcarrier period are in reciprocal relationship to each other, the subcarrier period is 15 kHz when the symbol length 66.7 µs.

Incidentally, when an extended CP is used, a normal TTI may include 12 OFDM symbols (or 12 SC-FDMA symbols). In this case, each OFDM symbol (or each SC-FDMA symbol) has a time length of 66.7 µs, and an extended CP of 16.67 µs is appended. Also, OFDM symbols may be used in the UL. Hereinafter, when OFDM symbols and SC-FDMA symbols are not distinguished, they will be collectively referred to as "symbols."

Meanwhile, in future radio communication systems such as LTE of Rel. 13 and later versions and 5G, a radio interface that is suitable for a high frequency bands such as several tens of GHz, and/or a radio interface that minimizes delay by reducing the packet size are desired, so that communication with a relatively small amount of data such as IoT (Internet of Things), MTC (Machine Type Communication) and M2M (Machine To Machine) can be suitably performed.

When TTIs of a shorter time length than normal TTIs (hereinafter referred to as "short TTIs") are used, the time margin for processing (for example, encoding and decoding) in user terminals and radio base stations increases, so that the processing delay can be reduced. Also, when short TTIs are used, it is possible to increase the number of user terminals that can be accommodated per unit time (for example, one ms). For this reason, for future radio communication system, a study is in progress to use short TTIs, which are shorter than normal TTIs, as one channel-encoded data packet transmission time unit and/or as the scheduling or link adaptation processing unit.

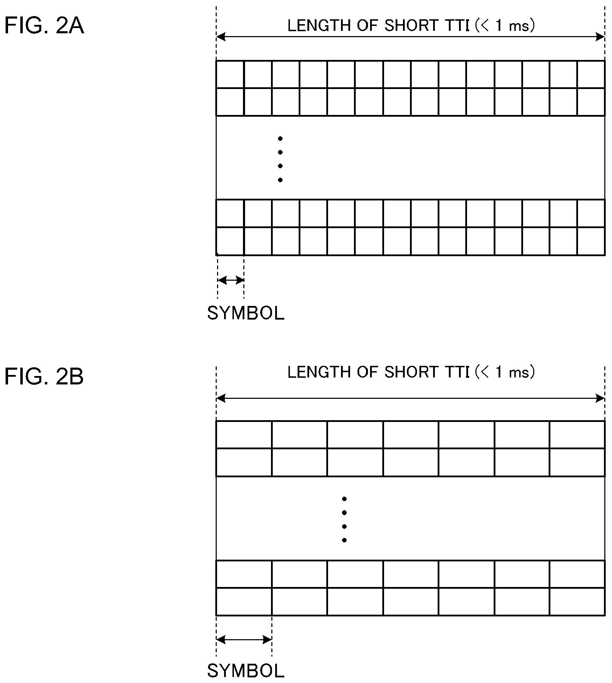

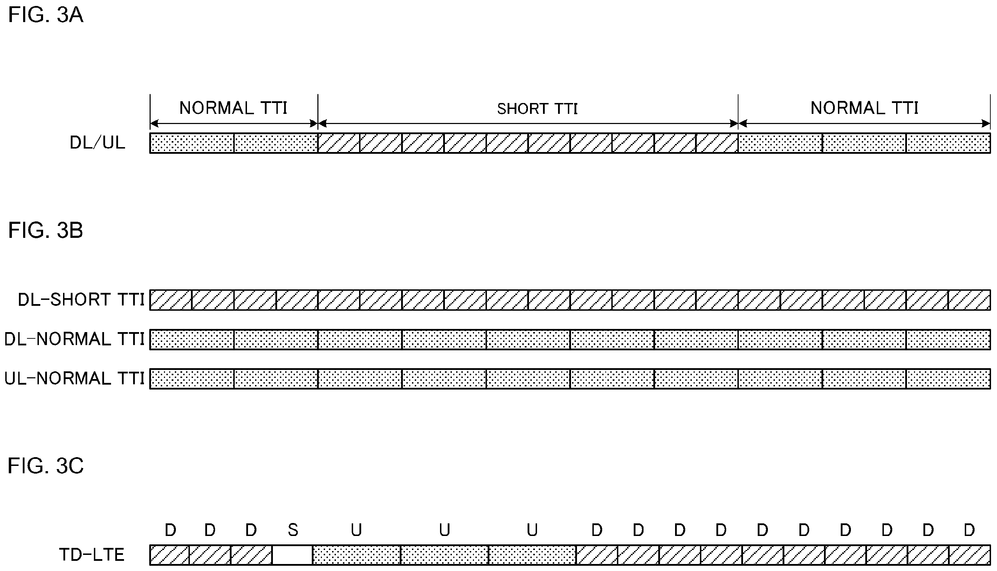

Referring to FIGs. 2 and 3, short TTI will be explained. FIGs. 2 provide diagrams to show example configurations of short TTIs. As shown in FIG. 2A and FIG. 2B, short TTIs have a time length (TTI length) shorter than one ms. A short TTI may be one TTI length or multiple TTI lengths, whose multiples are one ms, such as 0.5 ms, 0.25 ms, 0.2 ms and 0.1 ms, for example. Alternatively, when a normal CP is used, a normal TTI contains 14 symbols, so that one TTI length or multiple TTI lengths, whose multiples are integral multiples of 1/14 ms, such as 7/14 ms, 4/14 ms, 3/14 ms and 1/14 ms, may be used. Also, when an extended CP is used, a normal TTI contains 12 symbols, so that one TTI length or multiple TTI lengths, whose multiples are integral multiples of 1/12 ms, such as 6/12 ms, 4/12 ms, 3/12 ms and 1/12 ms, may be used. Also in short TTIs, as in conventional LTE, whether to use a normal CP or use an extended CP can be configured with higher layer signaling such as broadcast information and RRC signaling. By this means, it is possible to introduce short TTIs, while maintaining compatibility (synchronization) with one-ms normal TTIs.

FIG. 2A is a diagram to show a first example configuration of short TTIs. As shown in FIG. 2A, in the first example configuration, a short TTI is comprised of the same number of symbols (here, 14 symbols) as a normal TTI, and each symbol has a symbol length shorter than the symbol length of a normal TTI (for example, 66.7 µs).

As shown in FIG. 2A, when maintaining the number of symbols in a normal TTI and shortening the symbol length, the physical layer signal configuration (arrangement of REs, etc.) of normal TTIs can be reused. In addition, when maintaining the number of symbols in a normal TTI, it is possible to include, in a short TTI, the same amount of information (the same amount of bits) as in a normal TTI. On the other hand, since the symbol time length differs from that of normal TTI symbols, it is difficult, as shown in FIG. 2A, to frequency-multiplex a signal with short TTIs and a signal with normal TTIs in the same system band (or the cell, the CC, etc.).

Also, since the symbol length and the subcarrier period are each the reciprocal of the other, as shown in FIG. 2A, when shortening the symbol length, the subcarrier period is wider than the 15-kHz subcarrier period of normal TTIs. When the subcarrier period becomes wider, it is possible to effectively suppress the inter-channel interference caused by the Doppler shift when the user terminal moves and the communication quality degradation due to phase noise in the receiver of the user terminal. In particular, in high frequency bands such as several tens of GHz, the deterioration of communication quality can be effectively suppressed by expanding the subcarrier period.

FIG. 2B is a diagram to show a second example configuration of a short TTI. As shown in FIG. 2B, in the second example configuration, a short TTI is comprised of a smaller number of symbols than a normal TTI, and each symbol has the same symbol length (for example, 66.7 µs) as a normal TTI. For example, referring to FIG. 2B, if a short TTI is half the time length (0.5 ms) of a normal TTI, the short TTI is comprised of half the symbols (here, seven symbols) of a normal TTI.

As shown in FIG. 2B, when reducing the symbol length and reducing number of symbols, the amount of information (the amount of bits) included in a short TTI can be reduced lower than in a normal TTI. Therefore, the user terminal can perform the receiving process (for example, demodulation, decoding, etc.) of the information included in a short TTI in a shorter time than a normal TTI, and therefore the processing delay can be shortened. Also, since the short TTI signal shown in FIG. 2B and a normal-TTI signal can be frequency-multiplexed within the same system band (or the cell, the CC, etc.), compatibility with normal TTIs can be maintained.

Although FIG. 2A and FIG. 2B show examples of short TTIs assuming that a normal CP is applied (where a normal TTI is comprised of 14 symbols), the configuration of short TTIs is not limited to those shown in FIGs. 2A and 2B. For example, when an extended CP is used, the short TTI of FIG. 2A may be comprised of 12 symbols, and the short TTI of FIG. 2 B may be comprised of six symbols. A short TTI needs only be a shorter time length than a normal TTI, and the number of symbols in the short TTI, the length of symbols, the length of the CP and suchlike configurations can be determined freely.

Referring to FIG. 3, an example of the configuration of a short TTI will be described. Future radio communication systems may be configured so that both normal TTIs and short TTIs can be configured in order to maintain compatibility with existing systems.

For example, as shown in FIG. 3A, normal TTIs and short TTIs may coexist in time in the same CC (frequency field). To be more specific, short TTIs may be configured in specific subframes (or specific radio frames) of the same CC. For example, in FIG. 3A, short TTIs are configured in five consecutive subframes in the same CC, and normal TTIs are configured in the other subframes. Note that the number and locations of subframes where short TTIs are configured are not limited to those shown in FIG. 3A.

Also, carrier aggregation (CA) or dual connectivity (DC) may be performed by integrating CCs with normal TTIs and CCs with short TTIs, as shown in FIG. 3B. To be more specific, short TTIs may be configured in specific CCs (to be more specific, in the DL and/or the UL of particular CCs). For example, in FIG. 3B, short TTIs are configured in the DL of a particular CC and normal TTIs are configured in the DL and UL of another CC. Note that the number and locations of CCs where short TTIs are configured are not limited to those shown in FIG. 3B.

In the case of CA, short TTIs may also be configured in specific CCs (the primary (P) cell and/or secondary (S) cells) of the same radio base station. Meanwhile, in the case of DC, short TTIs may be configured in specific CCs (P cell and/or S cells) in the master cell group (MCG) formed by the first radio base station, or short TTIs may be configured in specific CCs (primary secondary (PS) cells and/or S cells) in a secondary cell group (SCG) formed by a second radio base station.

As shown in FIG. 3C, short TTIs may be configured in either the DL or the UL. For example, in FIG. 3C, a case is shown in which, in a TDD system, normal TTIs are configured in the UL and short TTIs are configured in the DL.

Also, specific DL or UL channels or signals may be assigned to (configured in) short TTIs. For example, an uplink control channel (PUCCH: Physical Uplink Control Channel) may be allocated to normal TTIs, and an uplink shared channel (PUSCH: Physical Uplink Shared Channel) may be allocated to short TTIs. In this case, for example, the user terminal transmits the PUCCH in normal TTIs and transmits the PUSCH in short TTIs.

In FIGs. 3, the user terminal configures (and/or detects) the short TTIs based on implicit or explicit reporting from the radio base station. Below, (1) an example of implicit reporting and examples of explicit reporting using (2) broadcast information or RRC (Radio Resource Control) signaling, (3) MAC (Medium Access Control) signaling, and (4) PHY (Physical) signaling will be explained.
(1) When implicit reporting is used, the user terminal may configure short TTIs (including, for example, judging that the communicating cell, channel, signal, etc. use short TTIs) based on the frequency band (for example, a band for 5G, an unlicensed band, etc.), the system bandwidth (for example, 100 MHz, etc.), whether or not LBT (Listen Before Talk) is employed in LAA (License Assisted Access), the type of data to be transmitted (for example, control data, voice, etc.), the logical channel, the transport block, the RLC (Radio Link Control) mode, the C-RNTI (Cell-Radio Network Temporary Identifier) and so on. Also, when control information (DCI) addressed to the subject terminal is detected in a PDCCH mapped to the first one, two, three or four symbols in a normal TTI and/or in a one-ms EPDCCH, the user terminal may judge that the one ms where the PDCCH/EPDCCH are included is a normal TTI, and, when control information (DCI) addressed to the subject terminal is detected in a PDCCH/EPDCCH configured otherwise (for example, a PDCCH mapped to symbols other than the first one to four symbols in a normal TTI and/or an EPDCCH that is less than one ms), the user terminal may then judge that a predetermined time period including the PDCCH/EPDCCH is a short TTI. Here, the control information (DCI) addressed to the subject terminal can be detected based on the CRC check result of blind -decoded DCI.
(2) When broadcast information or RRC signaling (higher layer signaling) is used, short TTIs may be configured based on configuration information that is reported from the radio base station to the user terminal via broadcast information or RRC signaling. The configuration information indicates, for example, which CCs and/or subframes are to be used as short TTIs, which channels and/or signals are transmitted/ received in short TTIs, and so on. The user terminal configures short TTIs semi-statically based on configuration information from the radio base station. Note that mode switching between short TTIs and normal TTIs may be performed in the RRC reconfiguration step or may be performed in intra-cell handover (HO) in P cells or in the removal/addition steps of CCs (S cells) in S cells.
(3) When MAC signaling (L2 (Layer 2) signaling) is used, short TTIs that are configured based on configuration information reported through RRC signaling may be activated or deactivated by MAC signaling. To be more specific, the user terminal activates or de-activates short TTIs based on L2 control signals (for example, MAC control elements) from the radio base station. The user terminal may be preconfigured with a timer that shows the activation period of short TTIs, by higher layer signaling such as RRC signaling, and, if, after short TTIs are activated by an L2 control signal, there is no UL/DL allocation in the short TTIs for a predetermined period, the short TTIs may be de-activated if. This short TTI deactivation timer may count normal TTIs (one ms) as units, or count short TTIs (for example, 0.25 ms) as units. Note that, when the mode is switched between short TTIs and normal TTIs in an S cell, the S cell may be de-activated once, or it may be possible to consider that the TA (Timing Advance) timer has expired. By this means, it is possible to provide a non-communicating period when switching the mode.
(4) When PHY signaling (L1 (Layer 1) signaling) is used, short TTIs that are configured based on configuration information reported by RRC signaling may be scheduled by PHY signaling. To be more specific, the user terminal detects short TTIs based on information included in L1 control signals that are received and detected (for example, a downlink control channel (PDCCH (Physical Downlink Control Channel) or EPDCCH (Enhanced Physical Downlink Control Channel), which hereinafter will be referred to as "PDCCH/EPDCCH").

For example, it is assumed that control information (DCI) for assigning transmission or reception in normal TTIs and short TTIs includes different information elements, and, (4-1) when the user terminal detects control information (DCI) including an information element that assigns transmission and reception in short TTIs, the user terminal identifies a predetermined time period including the timing where the PDCCH/EPDCCH is detected as a short TTI. The user terminal can blind-decode control information (DCI) for assigning transmission or reception in both normal TTIs and short TTIs in the PDCCH/EPDCCH. Alternatively, (4-2) when the user terminal detects control information (DCI) including an information element that assigns transmission/reception in short TTIs, the user terminal may identify a predetermined time period, in which the timing the PDSCH or the PUSCH scheduled by the PDCCH/EPDCCH (downlink control information (DCI) communicated in the PDCCH/EPDCCH) is transmitted/received is included, as a short TTI. Alternatively, (4-3) when the user terminal detects control information (DCI) including an information element that assigns transmission/reception in short TTIs, the user terminal may identify a predetermined a predetermined time period, in which the timing to transmit or receive retransmission control information (also referred to as "HARQ-ACKs" (Hybrid Automatic Repeat reQuest-Acknowledgements), "ACKs/NACKs," "A/Ns," etc.) for the PDSCH or the PUSCH scheduled by the PDCCH/EPDCCH (DCI communicated in the PDCCH/EPDCCH) is included, as a short TTI.

Further, the user terminal may detect short TTIs based on the state of the user terminal (for example, the idle state or the connected state). For example, if the user terminal is in the idle state, the user terminal may identify all the TTIs as normal TTIs and blind-decode only the PDCCHs included in the first to fourth symbols of the normal TTIs of one ms. Also, if the user terminal is in the connected state, the user terminal may configure (and/or detect) short TTIs based on the reporting of at least one of (1) to (4) described above as examples.

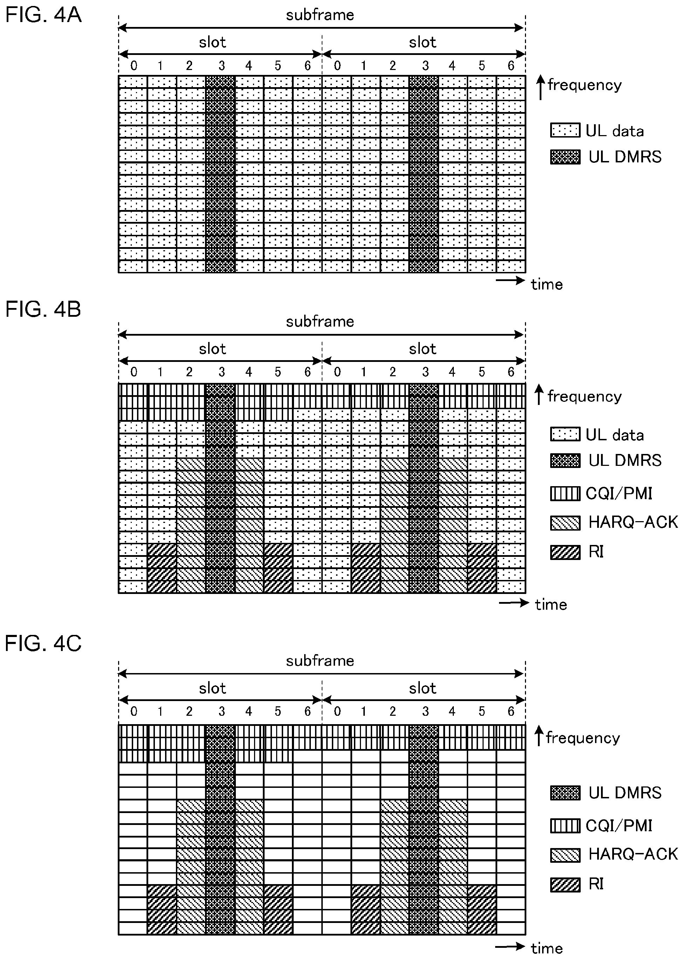

As described above, when short TTIs are configured, how to configure the PUSCH that is transmitted in short TTIs is the problem. By the way, the PUSCH to be transmitted in normal TTIs (subframe) is configured as shown in FIGs. 4.

As shown in FIGs. 4A to 4C, the demodulation reference signal (DMRS, which is also referred to as "UL DMRS" and so on) of the PUSCH transmitted in normal TTIs is mapped to a predetermined symbol in each slot constituting subframes. For example, when a normal CP is used (when each slot is comprised of seven symbols), as shown in FIGs. 4A to 4C, the DMRS is mapped to the symbol of index 3 in each slot (the central symbol in each slot), but this is by no means limiting. When an extended CP is used (each slot is comprised of six symbols), the DMRS may be mapped to the symbol of index 2 in each slot. Hereinafter, the predetermined symbol where the DMRS is mapped will be referred to as "DMRS symbol."

Here, the sequence length of the DMRS is the same as the transmission bandwidth of the PUSCH that is demodulated by using this DMRS. For DMRS sequences, at least 30 sequences are defined for each sequence length and grouped into 30 sequence groups. DMRS sequences used in the same cell belong to the same sequence group, and which sequence group (DMRS sequence index (DMRS sequence index)) is used within a cell may be changed between slots (group hopping). The sequence group (DMRS sequence index) may be determined based on the cell ID, may be reported to the user terminal via system information, or may be determined based on virtual cell IDs that may be configured for the PUSCH and the PUCCH respectively by user-specific RRC signaling.

Also, when a plurality of cells are synchronized, the DMRS is mapped to the same symbol (for example, the symbol of index 3 shown in FIGs. 4A to 4C) in any user terminal in any cell. Also, interference is randomized using cyclic shift (CS) and orthogonal code (OCC: Orthogonal Cover Code) among multiple DMRSs mapped to the same symbol.

In FIG. 4A, an example of a configuration for use when, in normal TTIs, uplink control information (UCI) is not transmitted by the PUSCH, but uplink data (also referred to as "uplink user data," "UL data," etc.) is transmitted instead, is shown. In FIG. 4A, uplink data is mapped to each symbol except for two DMRS symbols.

FIG. 4B shows an example of a configuration for use when, in normal TTIs, both UCI and uplink data are transmitted by the PUSCH. In addition, the UCI may include at least one of a channel quality indicator (CQI), a precoding matrix indicator (PMI), and a rank indicator (RI), the above-noted HARQ-ACK, and so on.

As shown in FIG. 4B, in normal TTIs, the CQI and/or the PMI (hereinafter referred to as "CQI/PMI") are mapped to the symbols, other than the two DMRS symbols, along the time direction, from the PRB at one end of the PUSCH transmission band (for example, one or more physical resource blocks (PRBs)). Also, the HARQ-ACK is mapped to the symbols adjacent to the two DMRS symbols, respectively, along the time direction, from the PRB at the other end of the transmission band. In addition, the RI is mapped along the time direction to the symbols adjacent to the HARQ-ACK. The uplink data, the CQI/PMI and the RI are individually encoded and rate-matched, multiplexed, and punctured based on the HARQ-ACK.

In FIG. 4C, an example of a configuration for use when UCI is transmitted by the PUSCH in normal TTIs is shown. In FIG. 4C, The CQI/PMI, the HARQ-ACK and the RI are mapped to symbols within normal TTIs, as in FIG. 4B.

Note that FIGs. 4A to 4C illustrate images of mapping before the DFT (Discrete Fourier Transform) is applied. Symbols that are actually transmitted may be arranged interleaved in the frequency direction. All of the mapping images shown below are images before applying the DFT. In addition, the DFT is not applied to the DMRS.

The PUSCH is transmitted in normal TTIs using the configurations shown in FIGs. 4A to 4C. However, it is more likely that the above-described PUSCH configurations in normal TTIs cannot be applied, on an as-is basis, to short TTIs that are comprised of a smaller number of symbols than the normal TTIs (see FIG. 2B). Meanwhile, if the PUSCH of short TTIs is configured without considering the normal TTI PUSCH configuration (especially, the DMRS symbols in each slot), there is a danger that interference with user terminals (legacy UEs) that send the PUSCH using normal TTIs may increase.

Therefore, the present inventors have conceived of an idea of including at least one DMRS symbol per short TTI, which is comprised of a smaller number of symbols than a normal TTI, while maintaining the DMRS symbols in normal TTIs. To be more specific, according to the present invention, a short TTI is configured to include one of the two DMRS symbols in a normal TTI, and the DMRS of the PUSCH of the short TTI is transmitted and received in this one symbol.

Now, embodiments of the present invention will be described below in detail with reference to the accompanying drawings. In the present embodiment, a short TTI (second TTI) is comprised of a smaller number of symbols than a normal TTI (first TTI), and each symbol has the same symbol length as a normal TTI (see FIG. 2B). The number of short TTIs included in a normal TTI is, for example, 2 or 4, but is by no means limited to these.

Also, a short TTI is also referred to as a "partial TTI," "short TTI," "sTTI," "shortened subframe," "short subframe" and so on, and a normal TTI is also referred to as a "TTI," "long TTI," "lTTI," "normal TTI," "normal subframe," "long subframe," and so on, or may be simply referred to as a "subframe" or the like. Also, although cases will be described below in which a normal CP is applied to each symbol, the present invention is by no means limited to this. This embodiment can also be applied as appropriate when an extended CP is applied to each symbol.

### (First Example)

In the first example, an example of a PUSCH configuration for use when UCI is not transmitted using the PUSCH allocated in short TTIs, and when, instead, uplink data is transmitted, will be explained.

### <When DMRS Symbol Is Maintained>

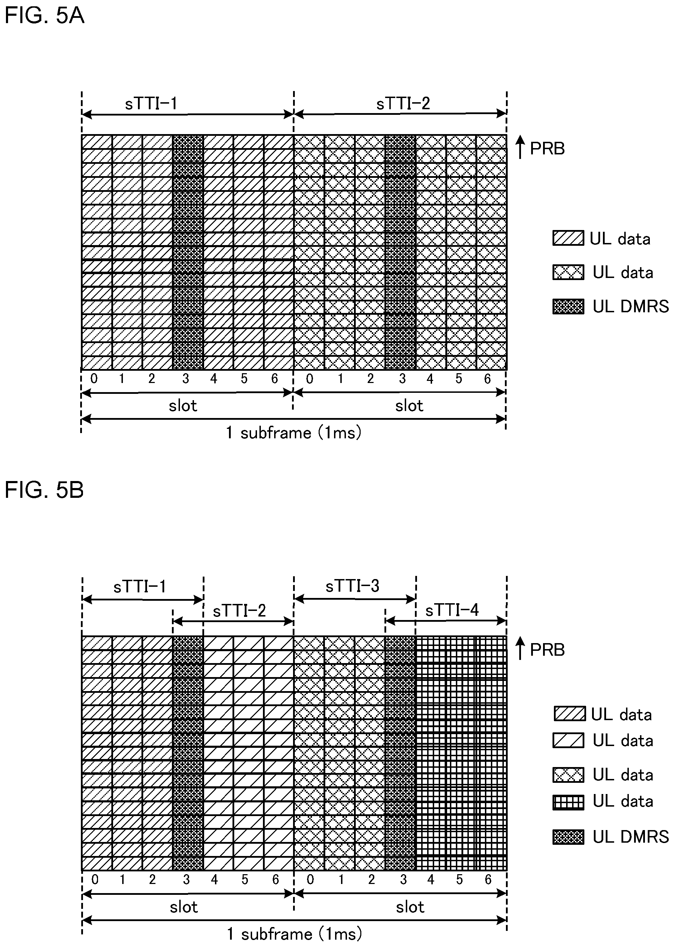

FIGs. 5 provide diagrams to show examples of PUSCH configurations in short TTIs (sTTIs) according to the first example. FIG. 5A illustrates a case where two sTTIs are included per normal TTI (subframe), and FIG. 5B shows a case where four sTTIs are included per subframe. As shown in FIGs. 5A and 5B, in a subframe including a plurality of sTTIs, DMRS symbols are provided in the same symbol in normal TTIs (that is, in the central symbol in each slot).

In FIG. 5A, each sTTI is comprised of seven symbols, including the DMRS symbol. The user terminal maps the DMRS of sTTI-1 to the DMRS symbol in the first slot (hereinafter referred to as a "first DMRS symbol") and maps the DMRS of sTTI-2 to the DMRS symbol in the second slot (hereinafter referred to as a "second DMRS symbol").

Meanwhile, in FIG. 5B, each sTTI is comprised of four symbols, including the DMRS symbol that is shared by a plurality of sTTIs. The first DMRS symbol is included in both sTTI-1 and STTI-2, and is shared by sTTI-1 and sTTI-2. The second DMRS symbol is included in both sTTI-3 and STTI-4 and is shared by sTTI-3 and STTI-4.

In FIGs. 5A and 5B, different user terminals may transmit the PUSCH between different sTTIs, or the same user terminal may transmit the PUSCH. Also, although not shown, the examples of configurations shown in FIGs. 5A and 5B may be combined. For example, one sTTI may be configured in the first slot of a subframe as shown in FIG. 5A, and, two sTTIs may be configured in the second slot as shown in FIG. 5B, and this configuration may be reversed.

As shown in FIG. 5A, if a single DMRS symbol is used in a single sTTI, as is the case with the normal TTI DMRS, the user terminal can generate the DMRS using the cyclic shift index (CS index) and the OCC that are indicated in the CS/OCC indicator field included in the DCI that allocates the PUSCH of this sTTI.

On the other hand, as shown in FIG. 5B, when a single DMRS symbol is shared by a plurality of sTTIs, the DMRSs of these multiple sTTIs are multiplexed on a single DMRS symbol. For example, as shown in FIG. 5B, if a single DMRS symbol is shared by a plurality of sTTIs, the DMRSs of these multiple sTTIs may be multiplexed by applying cyclic shifts and/or comb-shaped subcarrier arrangements (combs).

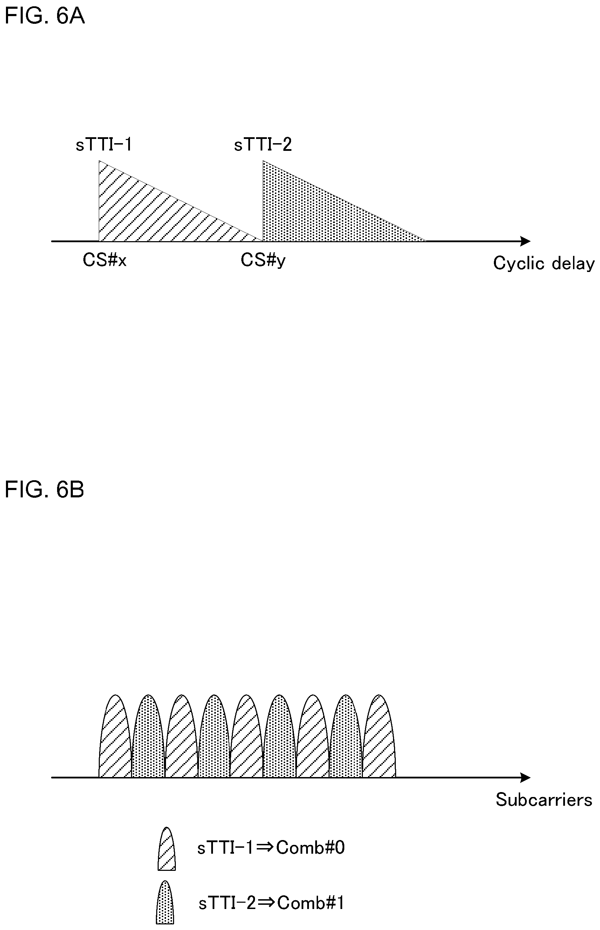

FIGs. 6 show examples of multiplexing of the DMRSs of a plurality of sTTIs sharing the same DMRS symbol. Although FIG. 6 illustrates an example of DMRS multiplexing where the first DMRS symbol is shared between sTTI-1 and sTTI-2 of FIG. 5B, the same applies also when the second DMRS symbol is shared by sTTI-3 and STTI-4.

In FIG. 6A, an example of multiplexing using cyclic shifts is shown. Each sTTI's DMRS is generated using a unique CS index and mapped to the same DMRS symbol. For example, referring to FIG. 6A, the DMRS of sTTI-1 is generated using CS index #x, and the DMRS of sTTI-2 is generated using CS index #y. Note that the CS index of each sTTI may be indicated in a predetermined field in DCI (for example, CS/OCC indicator field, cyclic shift field, etc.).

In FIG. 6B, an example of multiplexing using combs is shown. As shown in FIG. 6B, subcarriers of combs #0 and #1 are arranged alternately. A unique comb (subcarrier) is assigned to each sTTI's DMRS. For example, in FIG. 6B, comb #0 is assigned to the DMRS of sTTI-1, while comb #1 is assigned to the DMRS of sTTI-2. The comb of each sTTI may be specified in a predetermined field (for example, in the CS/OCC field, etc.) in DCI (for example, comb #0 may be specified if the value of the predetermined field = 0), or may be determined in advance depending on which sTTI it is (for example, comb #0 may be specified if the sTTI is sTTI1).

Note that in FIGs. 6A and 6B, when the same user terminal transmits the PUSCH in a plurality of sTTIs sharing a single DMRS symbol, the user terminal may generate and transmit the DMRS of only one of these multiple sTTIs. In this case, for example, in FIG. 6A, the DMRS is generated using either CS index #x or #y, and, in FIG. 6B, the DMRS is mapped to either comb #0 or #1.

Also, DMRS of each sTTI may be multiplexed using both the cyclic shifts shown in FIG. 6A and the comb shown in FIG. 6B. In this case, multiple DMRSs are multiplexed in the same comb by applying cyclic shifts, so that it is possible to multiplex three or more DMRSs.

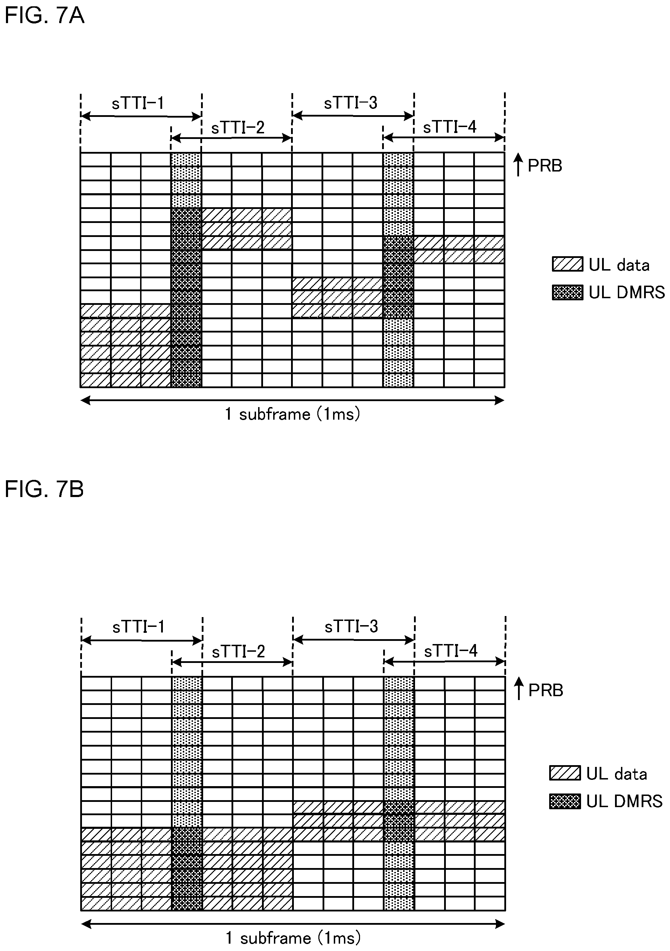

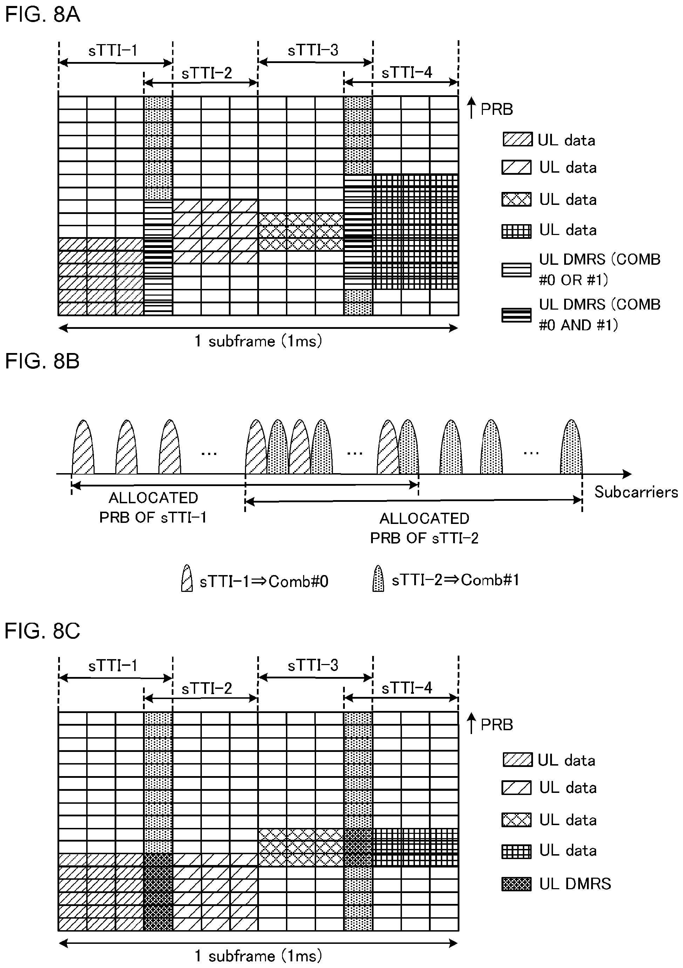

Referring to FIGs. 7 and 8, examples of mapping the DMRSs of multiple sTTIs sharing the same DMRS symbol will be described. FIG. 7 is a diagram to show a case where the same user terminal transmits the PUSCH in a plurality of sTTIs sharing the same DMRS symbol. In FIG. 7, the PUSCHs of multiple sTTIs are allocated to the same user terminal, so that the user terminal may transmit the DMRS of only one of these multiple sTTIs.

In FIG. 7A, the PUSCH can be assigned to different PRBs among a plurality of sTTIs sharing the same DMRS symbol. In this case, the DMRS may be mapped to PRBs, including at least the PRBs (allocated PRBs) to which the PUSCH is allocated in these multiple sTTIs. The user terminal determines the PRBs (mapping PRBs), where the DMRS is mapped (transmitted), based on the allocated PRBs in these multiple sTTIs sharing the same DMRS symbol.

For example, in FIG. 7A, in the user terminal, in the first DMRS symbol, the DMRS of either sTTI-1 or sTTI-2 is mapped to consecutive PRBs, including the allocated PRBs of sTTI-1 and sTTI-2, and transmitted. Also, in the user terminal, in the second DMRS symbol, the DMRS of either sTTI-3 or sTTI-4 is mapped to consecutive PRBs, including the allocated PRBs of sTTI-3 and sTTI-4, and transmitted.

Also, if no PUSCH that is directed to the user terminal is allocated in sTTI-2, the user terminal may map the DMRS of sTTI-1 to the allocated PRBs of sTTI-1 in the first DMRS symbol and transmit this. Similarly, if no PUSCH that is directed to the user terminal is allocated in sTTI-4, the user terminal may map the DMRS of sTTI-3 to the allocated PRBs of sTTI-3 in the second DMRS symbol and transmit this. Furthermore, if no PUSCH that is directed to the user terminal is allocated in sTTI-1, the user terminal may map the DMRS of sTTI-2 to the allocated PRBs of sTTI-2 in the first DMRS symbol and transmit this. Similarly, if no PUSCH that is directed to the user terminal is allocated in sTTI-3, the user terminal may map the DMRS of sTTI-4 to the allocated PRBs of sTTI-4 in the second DMRS symbol and transmit this.

In the case shown in FIG. 7A, the mapping PRBs in the DMRS symbol are determined based on the allocated PRBs in a plurality of sTTIs sharing the same DMRS symbol, so that it is possible to allocate the PUSCH, flexibly, in all of these multiple sTTIs, and to perform channel estimation in all the PRBs allocated in these plurality of sTTIs. Also, the DMRS can be mapped in the DMRS symbol by taking into consideration these multiple sTTIs.

In FIG. 7B, the PUSCHs is allocated to the same PRB among a plurality of sTTIs sharing the same DMRS symbol (the PUSCH cannot be assigned to different PRBs). In this case, the DMRS is mapped to the same PRBs as the allocated PRBs of one of the multiple sTTIs. The user terminal determines the mapping PRBs in the DMRS symbol based on the allocated PRBs in one of a plurality of sTTIs (for example, the first sTTI) sharing the same DMRS symbol.

For example, in FIG. 7B, in the first DMRS symbol, the user terminal maps and transmits only the DMRS of sTTI-1 in the allocated PRBs of sTTI-1. In this case, it is assumed that the user terminal, where the PUSCH is scheduled in sTTI-1, is not allocated different PRBs in sTTI-2. Similarly, in the second DMRS symbol, the user terminal maps and transmits only the DMRS of sTTI-3 in the allocated PRBs of sTTI-3. In this case, it is assumed that the user terminal, where the PUSCH is scheduled in sTTI-4, is not allocated different PRBs in sTTI-4.

In the case shown in FIG. 7B, the mapping PRBs in the DMRS symbol and the DMRS sequence are determined only in the first sTTI among a plurality of sTTIs sharing the same DMRS symbol, so that it is possible to start channel estimation without waiting for the decoding of the allocation information of sTTIs that come later in time, and to improve the effect of reducing processing delay.

FIGs. 8 provide diagrams to show cases where different user terminals transmit PUSCHs in a plurality of sTTIs sharing the same DMRS symbol. In FIGs. 8, the PUSCH is allocated to different user terminals among a plurality of sTTIs, so that different CS indices and/or different combs are applied to the DMRSs of these multiple sTTIs.

In FIG. 8A, the PUSCH is allocated to different PRBs among a plurality of sTTIs sharing the same DMRS symbol. In this case, the DMRSs of the sTTIs may be multiplexed using combs. To be more specific, the DMRSs of the sTTIs are mapped to different combs in the allocated PRBs of each sTTI.

For example, in FIG. 8A, comb #0 is assigned to the DMRS of sTTI-1 and comb #1 is assigned to the DMRS of sTTI-2. In this case, the user terminal maps the DMRS of sTTI-1 to comb #0 in the allocated PRBs of sTTI-1. Meanwhile, the user terminal maps the DMRS of sTTI-2 to comb #1 in the allocated PRBs of sTTI-2.

As a result of this, as shown in FIG. 8B, in PRBs where the PUSCH is allocated only in sTTI-1, the DMRS is mapped only to the subcarriers of comb #0. Meanwhile, in PRBs where the PUSCH is allocated only in sTTI-2, the DMRS is mapped only to the subcarriers of comb #1. In PRBs where the PUSCH is allocated in both sTTI-1 and sTTI-2, the DMRS is mapped to the subcarriers of combs #0 and #1.

As shown in FIG. 8A and FIG. 8B, when the DMRSs of a plurality of sTTIs sharing the same DMRS symbol are multiplexed by using combs, the PUSCH can be assigned to different PRBs among these plurality of sTTIs. As a result, flexible scheduling can be executed.

In FIG. 8C, the PUSCH is allocated to the same PRBs among a plurality of sTTIs sharing the same DMRS symbol. In this case, the DMRSs of these multiple sTTIs are multiplexed by applying cyclic shifts. To be more specific, the DMRSs of the multiple sTTIs are mapped to the same PRBs using different CS indices. The user terminal determines the mapping PRBs in the DMRS symbol based on the allocated PRBs in one of these multiple sTTIs (for example, the first sTTI).

For example, in FIG. 8C, the user terminal generates the DMRS of sTTI-1 and the DMRS of sTTI-2 using different CS indices and maps them to the allocated PRBs of sTTI-1 in the first DMRS symbol. In this case, it is assumed that the user terminal, where the PUSCH is scheduled in sTTI-1, is not allocated different PRBs in sTTI-2. The same is true for sTTI-3 and sTTI-4.

As shown in FIG. 8C, if it is assumed that the PUSCH is allocated to the same PRBs among a plurality of sTTIs sharing the same DMRS symbol, the DMRSs of the multiple sTTIs can be multiplexed by applying cyclic shifts, and it is possible to improve compatibility with existing systems that do not apply combs to the DMRS. Also, the DMRS-mapping PRBs can be determined only in the first sTTI among these multiple sTTIs, so that the effect of reducing processing delay can be improved.

In FIGs. 8A and 8B, when the DMRSs of a plurality of sTTIs sharing the same DMRS symbol are multiplexed by using combs, the combs may be explicitly assigned to the DMRS of each sTTI, or may be assigned implicitly.

To be more specific, comb indices may be designated according to the value of a predetermined field (for example, the CS/OCC indicator field, the cyclic shift field, etc.) included in DCI (for example, PUSCH-allocating UL grant). For example, the CS/OCC indicator field value 0 may indicate comb index #0, and the CS/OCC indicator field value 1 may indicate comb index #1.

Alternatively, the user terminal may determine the comb index based on the location and index of the sTTI where the PUSCH is transmitted (sTTI where the PUSCH is scheduled). In this case, which comb is assigned to each sTTI sharing the same DMRS symbol may be determined in advance, or may be reported via higher layer signaling. For example, in FIG. 8A, the user terminal may select comb index #0 for the DMRS of sTTI-1 (or sTTI-3), and select comb index #1 for the DMRS of sTTI-2 (or sTTI-4).

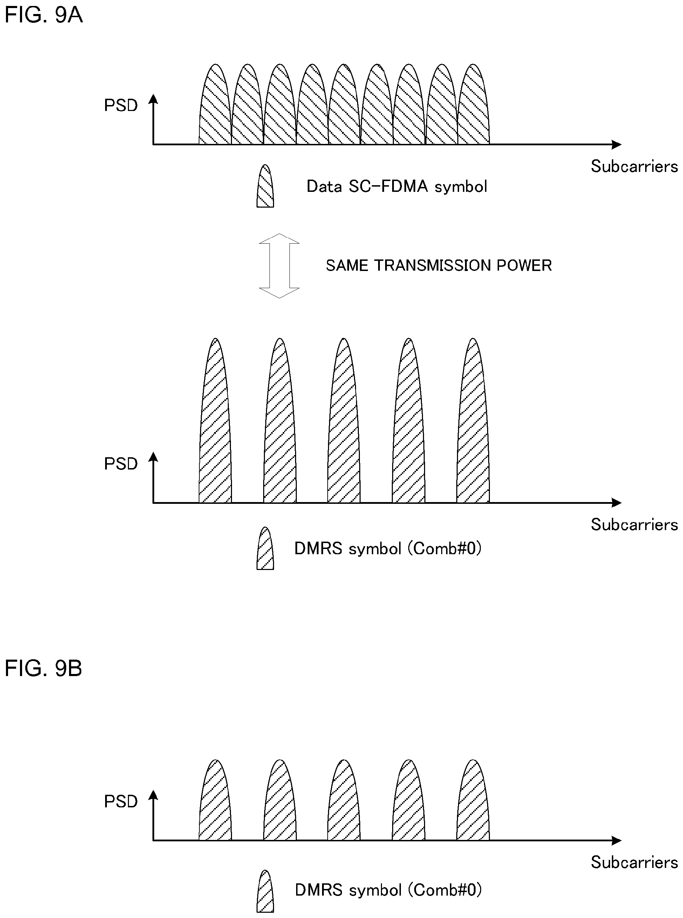

Also, when combs are applied to each sTTI's DMRS, the user terminal may control the transmission power of the PUSCH based on the number of combs. FIGs. 9 provide diagrams to show the relationship between transmission power and PSD (Power Spectrum Density). As shown in FIG. 9A, when the transmission power of DMRSs to which a combs are applied and the transmission power of the PUSCH are made equal, the PSD of these DMRSs is the PSD of the PUSCH multiplied by the number of combs (double in this case).

Therefore, the user terminal may set the transmission power of DMRSs, to which combs are applied, to (1/the number of combs) (here, 1/2). As a result, as shown in FIG. 9B, the PSD pf DMRSs becomes lower, and the PSD of DMRSs becomes equal to the PSD of the PUSCH. As a result, it is possible to reduce the DMRS-induced interference against other cells, and to estimate the received SINR of uplink data can be more easily.

Also, if the PUSCH is allocated to the same PRB among multiple sTTIs sharing the same DMRS symbol, in FIG. 8C, the DMRSs of these multiple sTTIs are multiplexed by applying cyclic shifts, but the present invention is not limited thereto. The DMRS of multiple sTTIs can be multiplexed by applying combs.

As described above, when the DMRSs of sTTIs comprised of a smaller number of symbols than normal TTIs are mapped to the DMRS symbol in each slot in normal TTIs, the PUSCH can be transmitted in sTTIs, without increasing interference against legacy UEs that transmit the PUSCH in normal TTIs, and the processing delay can be reduced.

### <When Increasing DMRS Symbols>

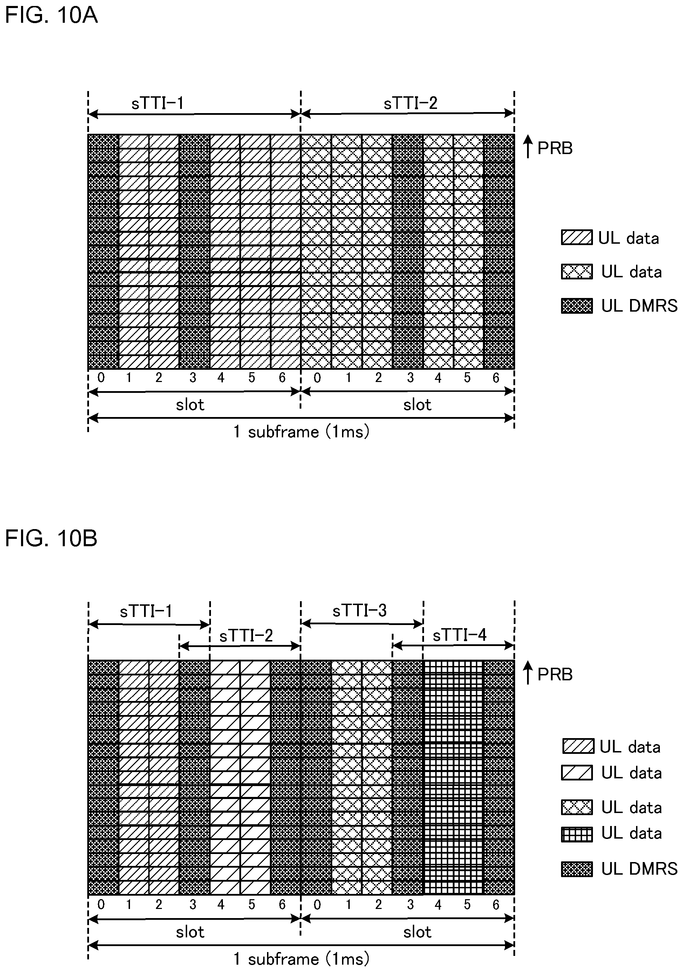

Referring to FIGs. 10, a case will be described where, in each sTTI, an additional DMRS symbol (hereinafter referred to as "additional DMRS symbol") is provided, besides the first and second DMRS symbols. Note that the description of FIGs. 10 will primarily focus on differences from FIG. 5.

FIGs. 10 provide a diagram to show other examples of PUSCH configurations in sTTIs according to the first example. FIG. 10A shows a case where two sTTIs are included per subframe, and FIG. 10B shows a case where four sTTIs are included per subframe. As shown in FIGs. 10A and 10B, in a subframe including a plurality of sTTIs, in addition to the first and second DMRS symbols, an additional DMRS symbols may be provided in each sTTI.

For example, in FIG. 10A, in sTTI-1, an additional DMRS symbol is provided in the first symbol (index 0), and, in TTI-2, an additional DMRS symbol is provided in the last symbol (index 6). Similarly, in FIG. 10B, in sTTI-1, an additional DMRS symbol is provided in the first symbol (index 0), and, in sTTI-2, an additional DMRS symbol is provided in the last symbol (index 6). The same is true for sTTI-3 and sTTI-4. The locations of additional DMRS symbols are not limited to those shown in FIGs. 10A and 10B.

In FIGs. 10A and 10B, as has been described with reference to FIGs. 5 to 8, the DMRSs in the first and second DMRS symbols can be generated using at least one of CS indices, OCCs, and combs. This makes it possible to ensure orthogonality and randomization with legacy UEs that send the PUSCH in normal TTIs.

Meanwhile, the DMRS of additional DMRS symbols may be generated using DMRS sequences and/or CS indices of different groups (DMRS sequence indices) than the first and second DMRS symbols. At this time, the DMRS sequence-generating group (DMRS sequence index) may be changed between the first and second DMRS symbols and the additional DMRS symbols based on, for example, the cell ID and virtual cell IDs. This makes it possible to make the group (DMRS sequence index) hopping rules different between user terminals connected to different cells, so that the randomization of inter-cell interference can be strengthened.

In the cases shown in FIGs. 10A and 10B, as in normal TTIs, there are two DMRS symbols per sTTI, so that the accuracy of channel estimation of the PUSCH transmitted in sTTIs can be made the same level as in that of the PUSCH transmitted in normal TTIs. For this reason, the accuracy of channel estimation of the PUSCH transmitted in sTTIs can be improved compared with the configurations shown in FIGs. 5A and 5B.

FIG. 10A and 10B are merely examples, and the number of DMRS symbols in an sTTIs is not limited to what is illustrated therein. For example, three or more DMRS symbols may be provided per sTTI by providing two or more additional DMRS symbols in FIGs. 10A and 10B. By increasing the number of DMRS symbols per sTTI, the accuracy of channel estimation can be further improved.

Also, it is assumed that the sounding reference signal (SRS), rather than uplink data, is placed in the last symbol of normal TTIs. In accordance with this, an additional DMRS symbol may be configured in the last symbol in the last sTTI in subframes (for example, sTTI-2 in FIG. 10A or sTTI-4 in FIG. 10B). As a result, even when a legacy UE that transmits a PUSCH in normal TTIs uses a format (shortened format), in which uplink data is not allocated to the final symbol, it is possible to prevent interference from the DMRS (additional DMRS) of the sTTI in the final symbol.

As described above, when additional DMRS symbols are provided, it is possible to prevent interference against legacy UEs that transmit the PUSCH in normal TTIs, and, furthermore, improve the accuracy of channel estimation of the PUSCH transmitted in sTTIs.

### (Second Example)

In a second example, an example PUSCH configuration for use when both UCI and uplink data are transmitted using the PUSCH allocated in sTTIs will be described. Since the DMRS transmission method in each sTTI in the second example is the same as in the first example, the explanation will be omitted. In the second example, the mapping of UCI and uplink data to resource elements (RE) in sTTIs constructed as described in the first example will be described.

In the following description, the case where the same first and second DMRS symbols as in normal TTIs are maintained (FIG. 5) will be explained, but the present invention is not limited thereto. The mapping method of UCI and uplink data in the second example can also be applied as appropriate to the case where additional DMRS symbols are added to each sTTI in addition to the first and second DMRS symbols (FIG. 10).

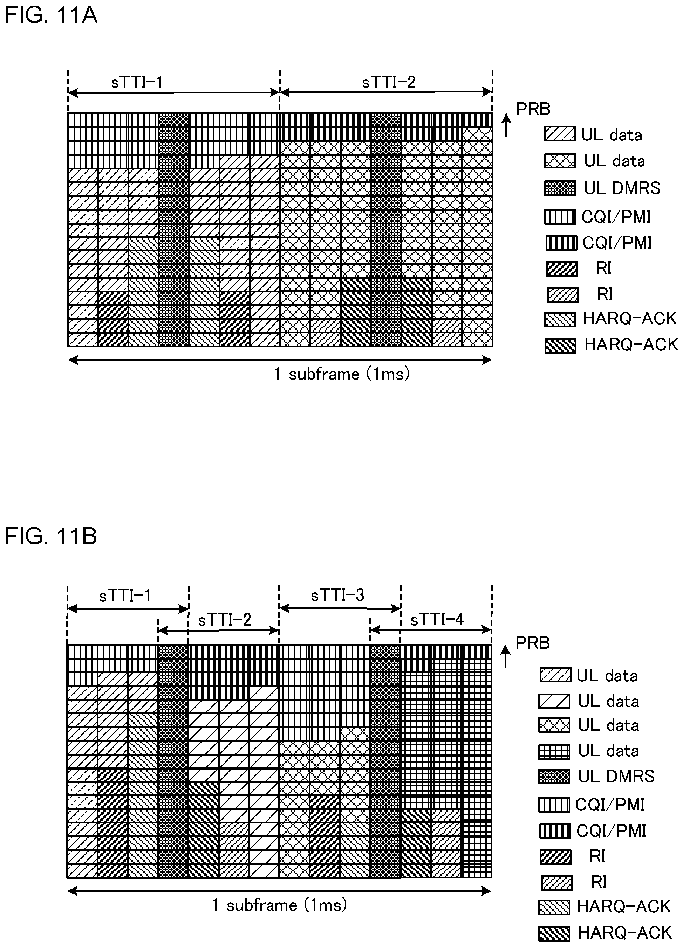

FIG. 11 is a diagram to show an example configuration of the PUSCH in sTTIs according to the second example. FIG. 11A shows a case where two sTTIs are included per subframe, and FIG. 11B shows a case where four sTTIs are included per subframe. In FIGs. 11A and 11B, regardless of whether the PUSCH is allocated to the same user terminal or to different user terminals among a plurality of sTTIs, different UCIs and uplink data are mapped to these multiple short TTIs.

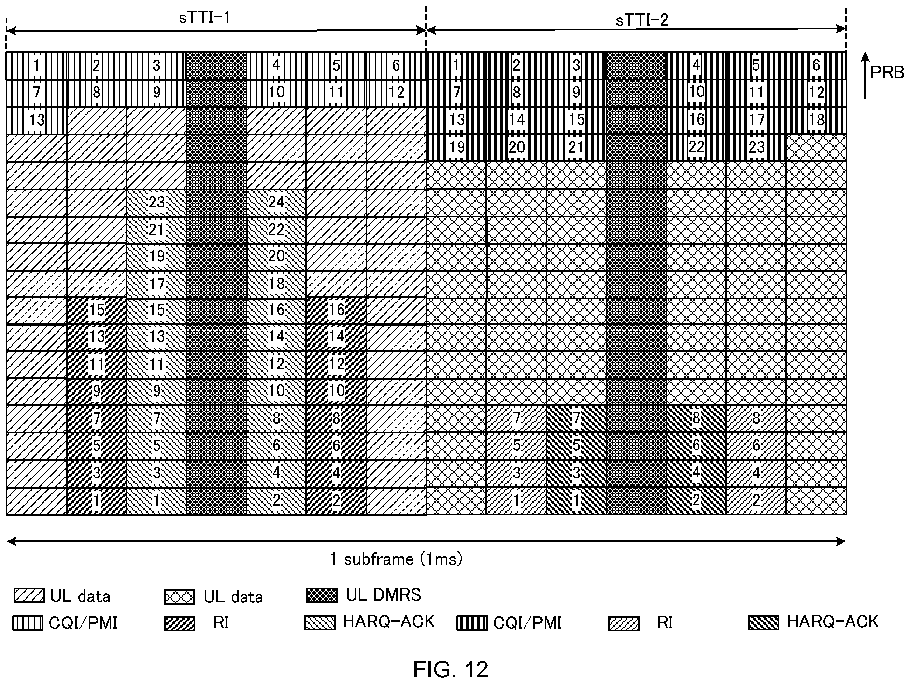

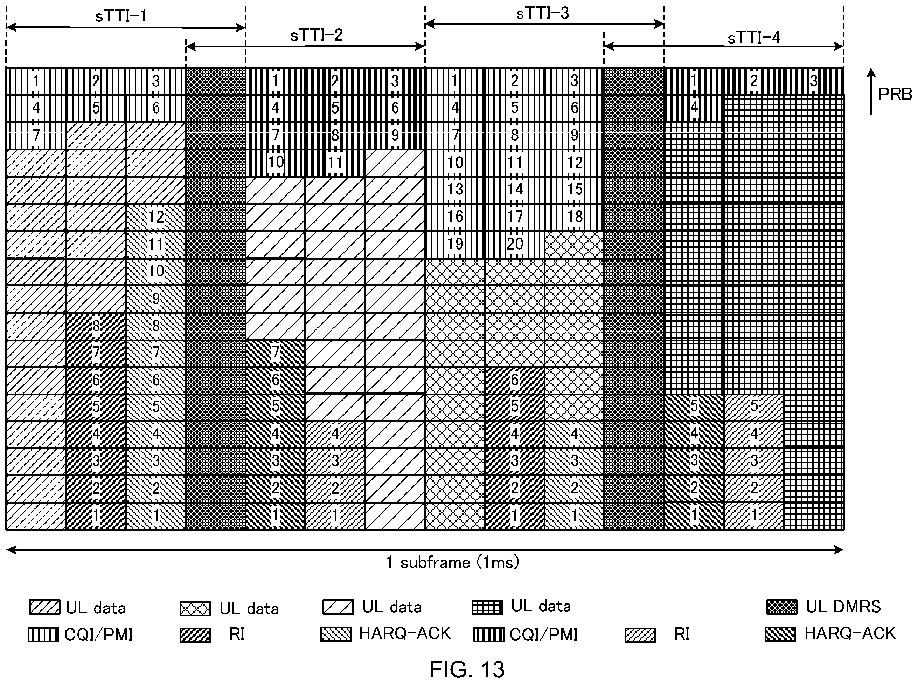

As shown in FIG. 11 A and FIG. 11 B, in each sTTI, UCI may be mapped according to the same rules as UCI mapped to normal TTIs. FIG. 12 and 13 show the mapping rules in the sTTI configuration shown in FIGs. 11A and 11B, respectively. Note that the numbers attached to the resources in FIGs. 12 and 13 indicate the mapping order of CQIs/PMIs, RIs, and HARQ-ACKs.

As shown in FIG. 12, in each sTTI, the CQI/PMI is mapped to the symbols other than the DMRS symbol, along the time direction, from the PRB at one end of the PUSCH transmission band. Also, HARQ-ACKs are mapped to the two symbols adjacent to the DMRS symbol, from the PRB at the other end of the transmission band, along the time direction. Also, the RI is mapped to the two outer symbols of the two symbols where HARQ-ACKs are mapped, along the time direction.

Also, in FIG. 12, the uplink data is encoded and rate-matched, multiplexed with the CQI/PMI, RI and punctured based on HARQ-ACK. As shown in FIG. 12, even when the same mapping rules as in normal TTIs are applied, the UCI and uplink data of each sTTI are mapped only to symbols, other than the DMRS symbol, in each sTTI, so that the number of mapped REs decreases compared to normal TTIs.

Similarly, in the case shown in FIG. 13, too, the mapping rules for normal TTIs are applied, and the UCI and uplink data of each sTTI are mapped only to symbols other than the DMRS symbols in each sTTI, so that the number of mapped REs decreases compared to normal TTIs. In FIG. 13, the HARQ-ACK and RI are each mapped to a single symbol in each sTTI. For this reason, the mapping of the HARQ-ACK and RI along the time direction in FIG. 13 is synonymous with mapping in the frequency direction.

### (Third Example)

In a third example, an example PUSCH configuration for use when UCI is transmitted, instead of uplink data, using the PUSCH allocated in sTTIs, will be described. The PUSCH configuration according to the third example is the same as in the second example, except that uplink data is not mapped.

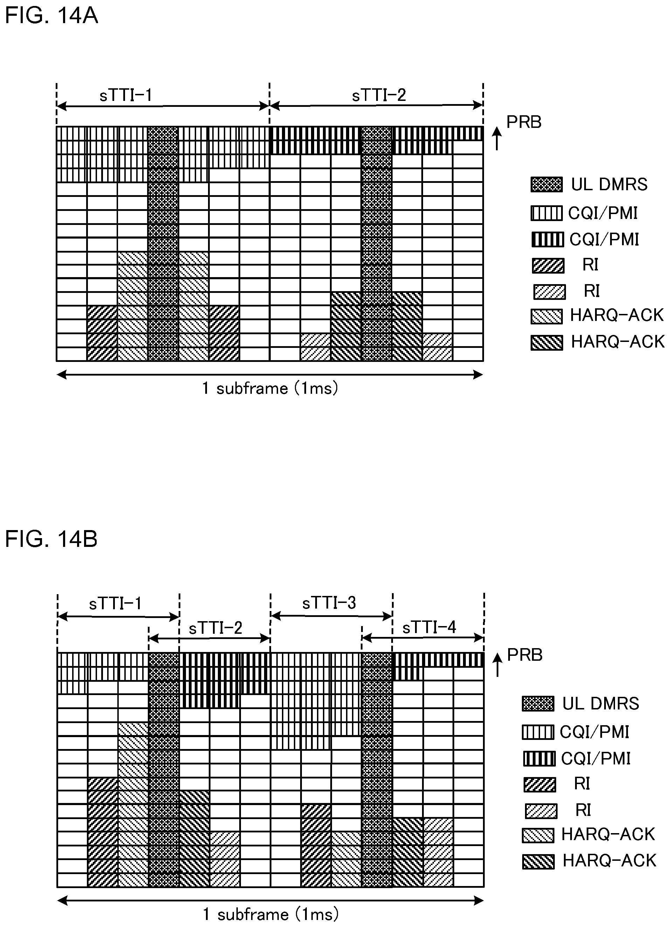

FIGs. 14 provide diagram to show examples configurations of the PUSCH in short TTIs according to the third example. The PUSCH configurations shown in FIG. 14A and FIG. 14B are the same as the PUSCH configurations described in the second example (FIGs. 11A and 11B), except that uplink data is not mapped. Since the UCI mapping method in each sTTI shown in FIG. 14A and FIG. 14B is the same as in the second example, the explanation will be omitted.

In FIG. 14, cases where the same first and second DMRS symbols as in normal TTIs are maintained (FIGs. 5) will be explained, but the present invention is not limited thereto. The UCI mapping method in the third example can also be applied as appropriate when an additional DMRS symbol is provided in addition to the first and second DMRS symbols in each sTTI (FIG. 10).

### (Others)

As explained in the second and third examples, when UCI is transmitted in the PUSCH in sTTIs (UCI on PUSCH), the payload may be limited, according to rules different from those of UCI transmitted in the PUSCH in normal TTIs.

For example, in the second and third examples, if the payload of HARQ-ACKs exceeds a predetermined threshold, or the ratio of the HARQ-ACK payload to the number of REs in the PUSCH (that is, the coding rate) exceeds a predetermined threshold, spatial bundling may be applied. Note that the predetermined threshold may be reported to the user terminal by higher layer signaling.

Also, in the second and third examples, if the payload of CQIs/PMIs exceeds a predetermined threshold, or the ratio of the CQI/PMI payload to the number of REs in the PUSCH (that is, the coding rate) exceeds a predetermined threshold, low-priority CQIs/PMIs may be dropped (the transmission of these CQIs/PMIs may be canceled). The priorities of CQIs/PMIs may be the same as the priorities in existing systems.

For example, in the second and third examples, if the payload of RIs exceeds a predetermined threshold, or the ratio of the RI payload to the number of REs of the PUSCH (that is, the coding rate) exceeds a predetermined threshold, the RIs of multiple cells may be combined. Note that, which multiple cells' RIs are combined may be reported to the user terminal by way of higher layer signaling. As methods of combining the RIs of a plurality of cells, (1) a method using the average of the RIs of a plurality of cells, (2) a method using the maximum RI value among a plurality of cells and (3) a method of using the minimum RI value among a plurality of cells and so on may be possible.

Alternatively, when data, CQIs/PMIs, RIs, HARQ-ACKs, etc. are included in the PUSCH transmitted in sTTIs, the bit sequence combining may be regarded as one codeword and joint-encoded. This allows you to eliminate the CRC bits that are added separately to each data and UCI, thus the reducing overhead. When large data (transport block) is divided into multiple code blocks and encoded individually, the UCI may be jointly-encoded in the first encoded block, in the last encoded block or in an encoded block a specific order. At this time, the bit sequence combining the data and the UCI may be configured in the order of data, HARQ-ACKs, RIs and CQI/PMIs. When the size of the bit sequence is excessive with respect to the amount of radio resources, all or part of the CQIs/PMIs are dropped, but there is no influence on the location of the data, HARQ-ACKs, RIs in the codeword bit sequence before and after the dropping, so that the encoding process can be simplified. In addition, the same order as data can be applied as the order of map encoded bits to radio resources when performing joint coding.

### (Radio Communication System)

Now, the structure of a radio communication system according to an embodiment of the present invention will be described below. In this radio communication system, the radio communication methods of the above-described embodiments are employed. Note that the radio communication methods of the above-described embodiments may be applied individually or may be applied in combination.

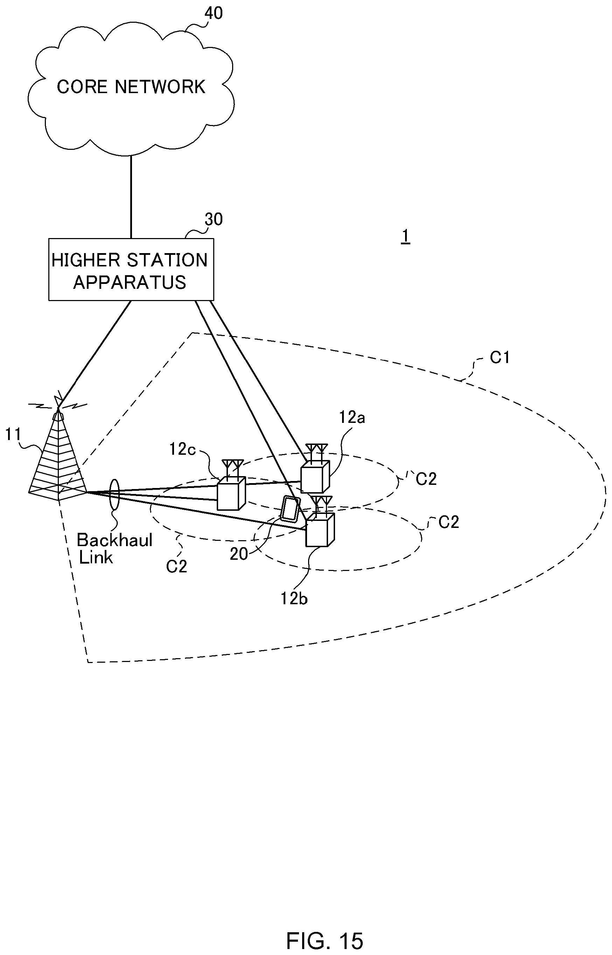

FIG. 15 is a diagram to show an example of a schematic structure of a radio communication system according to the present embodiment. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 15 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to make communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and OFDMA may be used in the uplink.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Uplink control information (UCI: Uplink Control Information), including at least one of delivery acknowledgment information (ACK/NACK) and radio quality information (CQI), is transmitted by the PUSCH or the PUCCH. By means of the PRACH, random access preambles for establishing connections with cells are communicated.

### <Radio base station>

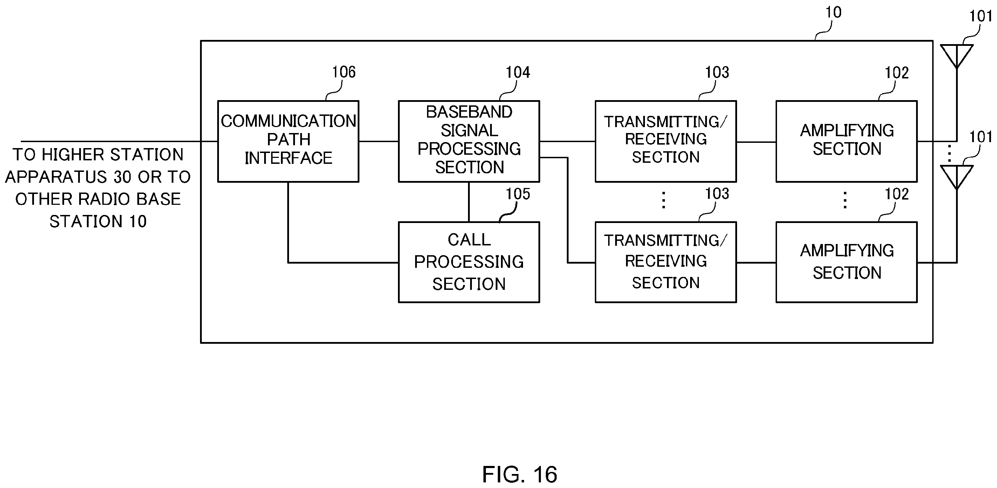

FIG. 16 is a diagram to show an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmission section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

Further, the transmitting/receiving sections 103 receive the PUSCH in short TTIs (second TTIs) comprised of a smaller number of symbols than normal TTIs (first TTI). This PUSCH may include uplink data (first example), may include both uplink data and UCI (second example), or may include UCI (third example).

Also, if a short TTI is configured to include at least one of the two symbols in which the DMRS (demodulation reference signal) of the PUSCH of a normal TTI is received, the transmitting/receiving sections 103 receives the DMRS of the PUSCH of the short TTI in this one symbol. Also, if an additional DMRS symbol is configured in a short TTI, the transmitting/receiving sections 103 may receive the DMRS of the short TTI in this additional DMRS symbol.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

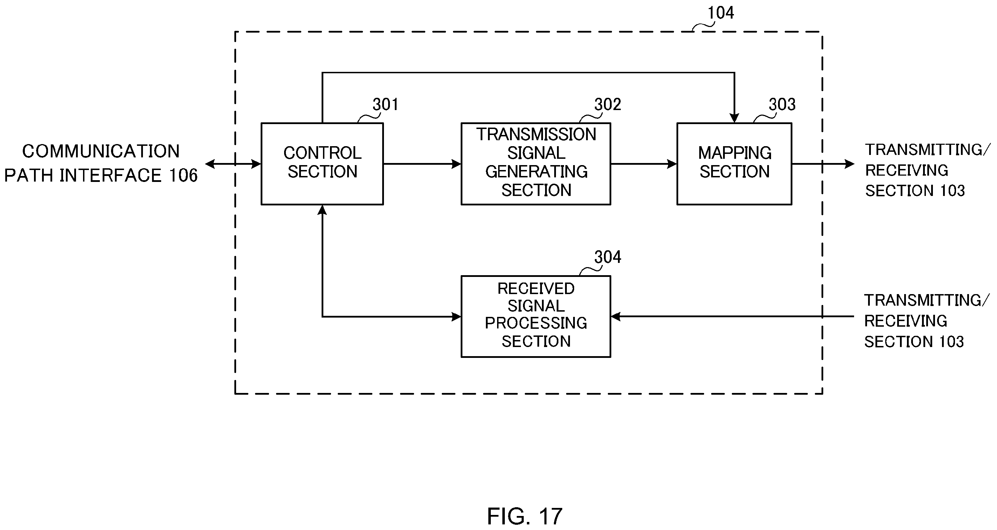

FIG. 17 is a diagram to show an example of a functional structure of a radio base station according to one embodiment of the present invention. Note that, although FIG. 17 primarily shows functional blocks that pertain to characteristic parts of the present embodiment, the radio base station 10 has other functional blocks that are necessary for radio communication as well. As shown in FIG. 17, the baseband signal processing section 104 has a control section 301, a transmission signal generation section 302, a mapping section 303 and a received signal processing section 304.

The control section 301 controls the entire radio base station 10. The control section 301 controls, for example, the generation of downlink signals by the transmission signal generation section 302, the mapping of signals by the mapping section 303, the signal receiving process by the received signal processing section 304, and the like.

To be more specific, the control section 301 controls the transmission of downlink (DL) signals (including, for example, controlling the modulation scheme, the coding rate, the allocation of resources (scheduling), etc.) based on channel state information (CSI) that is reported from the user terminals 20.

Further, the control section 301 controls the transmission time intervals (TTIs) used for receiving downlink signals and/or transmitting uplink signals. The control section 301 configures one-ms normal TTIs and/or short TTIs that are shorter than normal TTIs. Example structures and configurations of short TTIs have been explained with reference to FIGs. 2 and 3. The control section 301 may command configuration of short TTIs to the user terminal 20 by way of (1) implicit reporting, or by way of explicit reporting using at least one of (2) RRC signaling, (3) MAC signaling and (4) PHY signaling.

To be more specific, the control section 301 configures each short TTI (second TTI) so that one of the two symbols (DMRS symbols), in which the DMRS of the PUSCH of a normal TTI (first TTI) is transmitted, is included (see FIGs. 5, 10, 11 and 14). The control section 301 controls the received signal processing section 304 so that the PUSCH in short TTIs is demodulated based on the DMRS received in this one DMRS symbol (or the one DMRS symbol and an additional DMRS symbol).

The control section 301 can be constituted by a controller, a control circuit or a control device that can be described based on common understanding of the technical field to which the present invention pertains.

The transmission signal generating section 302 generates downlink signals (downlink control signals, downlink data signals, downlink reference signals and so on) based on commands from the control section 301, and outputs these signals to the mapping section 303. To be more specific, the transmission signal generation section 302 generates downlink data signals (PDSCH) including the above-mentioned reporting information (control information) to be sent in higher layer signaling, user data and so on, and outputs the generated downlink data signals (PDSCH) to the mapping section 303. Further, the transmission signal generation section 302 generates a downlink control signal (PDCCH/EPDCCH), including above-mentioned DCI, and outputs this to the mapping section 303. Further, the transmission signal generation section 302 generates downlink reference signals such as CRS and CSI-RS, and outputs them to the mapping section 303.

For the transmission signal generation section 302, a signal generator, a signal generating circuit or a signal generating device that can be described based on common understanding of the technical field to which the present invention pertains can be used.

The mapping section 303 maps the downlink signals generated in the transmission signal generation section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the receiving process (for example, demapping, demodulation, decoding and so on) of uplink signals that transmitted from the user terminals 20. To be more specific, the received signal processing section 304 demodulates the PUSCH in short TTIs by using the DMRS received in the above-noted one DMRS symbol (or the one DMRS symbol and the additional DMRS symbol) included in the short TTI. The processing results are output to the control section 301.

The receiving process section 304 can be constituted by a signal processor, a signal processing circuit or a signal processing device, and a measurer, a measurement circuit or a measurement device that can be described based on common understanding of the technical field to which the present invention pertains.

### <User terminal>

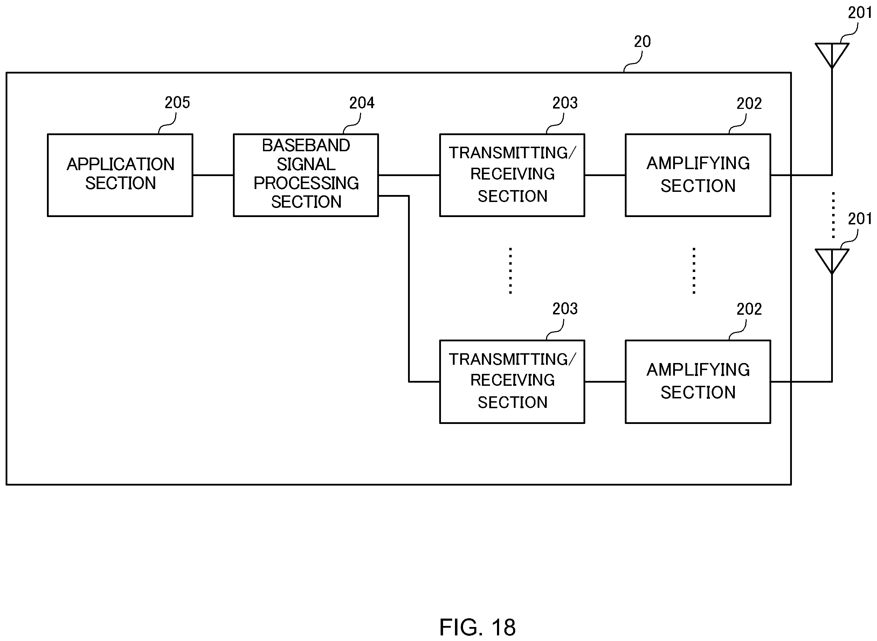

FIG. 18 is a diagram to show an example of an overall structure of a user terminal according to an embodiment of the present invention. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the downlink signals amplified in the amplifying sections 202. The received signal is subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. Downlink data (user data) is forwarded to the application section 205. The application section 205 performs processes related to higher layers above the physical layer and the MAC layer, and so on. Furthermore, in the downlink data, broadcast information is also forwarded to the application section 205.

Meanwhile, uplink data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI is also subjected to channel encoding, rate matching, puncturing, DFT processing, IFFT processing and so on, and forwarded to each transmitting/ receiving section 203.

The baseband signal that is output from the baseband signal processing section 204 is converted into a radio frequency bandwidth in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Further, the transmitting/ receiving sections 203 transmit the PUSCH in short TTIs (second TTIs) comprised of a smaller number of symbols than normal TTIs (first TTI). This PUSCH may include uplink data (first example), may include both uplink data and UCI (second example), or may include UCI (third example).

Also, if a short TTI is configured to include at least one of the two DMRS symbols in which the DMRS (demodulation reference signal) of the PUSCH of a normal TTI is received, the transmitting/receiving sections 103 transmit the DMRS of the PUSCH of the short TTI in this one symbol. Also, if an additional DMRS symbol is configured in a short TTI, the transmitting/receiving sections 203 may transmit the DMRS of the short TTI in this additional DMRS symbol.

For the transmitting/receiving sections 203, transmitters/receivers, transmitting/receiving circuits or transmitting/receiving devices that can be described based on common understanding of the technical field to which the present invention pertains can be used. Furthermore, a transmitting/receiving section 203 may be structured as one transmitting/receiving section, or may be formed with a transmission section and a receiving section.

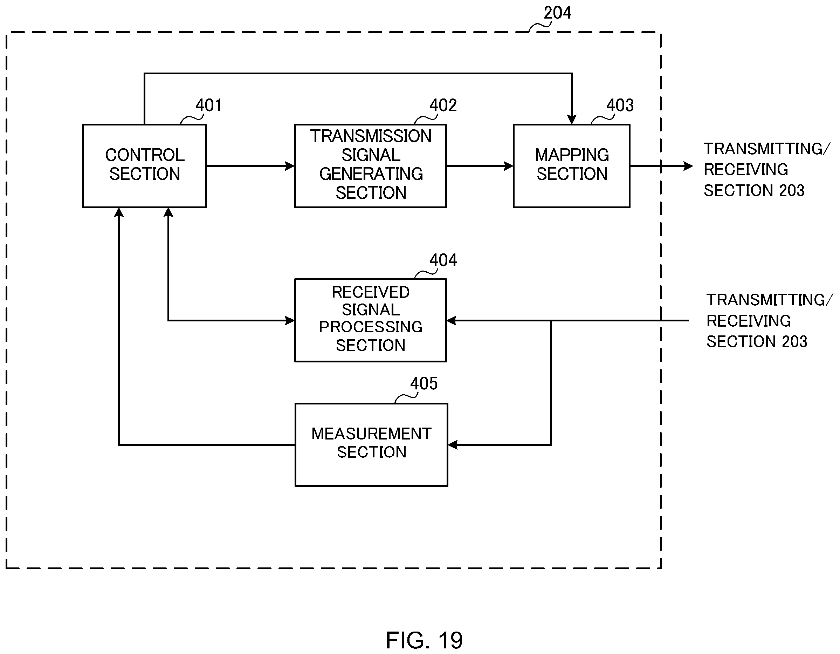

FIG. 19 is a diagram to show an example of a functional structure of a user terminal according to one embodiment of the present invention. Note that, although FIG. 19 primarily shows functional blocks that pertain to characteristic parts of the present embodiment, the user terminal 20 has other functional blocks that are necessary for radio communication as well. As shown in FIG. 19, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, the generation of signals in the transmission signal generation section 402, the mapping of signals in the mapping section 403, the signal receiving process in the received signal processing section 404, and so on.

Further, the control section 401 controls the transmission time intervals (TTI) used to receive downlink (DL) signals and/or to transmit of uplink (UL) signals. The control section 301 configures one-ms normal TTIs and/or short TTIs that are shorter than normal TTIs. Example structures and configurations of short TTIs have been explained with reference to FIGs. 2 and 3. The control section 401 may configure (detect) short TTIs based on (1) implicit reporting, or based on explicit reporting using at least one of (2) RRC signaling, (3) MAC signaling and (4) PHY signaling, from the radio base station 10.

To be more specific, the control section 401 configures each short TTI (second TTI) so that one of the two DMRS symbols, in which the DMRS of the PUSCH of a normal TTI (first TTI) is transmitted, is included (see FIGs. 5, 10, 11 and 14). Also, the control section 301 controls the transmission signal generation section 402 so that the DMRS in the short TTI is transmitted in this one DMRS symbol (or the one DMRS symbol and an additional DMRS symbol).

For example, if multiple short TTIs are contained in the above one DMRS symbol, the control section 401 performs control so that the demodulation reference signals of the plurality of short TTIs are multiplexed in this one DMRS symbol and transmitted. That is, the control section 401 performs control so that the DMRS of one short TTI among these plurality of short TTIs and the DMRSs of other short TTIs are multiplexed on one DMRS symbol and transmitted. Cyclic shifts and/or combs can be used for this multiplexing.

When the same user terminal 20 transmits the PUSCH in a plurality of short TTIs and different resource blocks can be allocated to the PUSCH (FIG. 7A), the control section 401 determines the DMRS-transmitting PRBs based on the PRBs respectively allocated in the plurality of short TTIs. The control section 401 may control the transmission signal generation section 402 so that the DMRS of one of the plurality of short TTIs (for example, the earliest short TTI) is transmitted using the determined PRBs.

Also, when the same user terminal 20 transmits the PUSCH in a plurality of short TTIs and different resource blocks cannot be allocated to the PUSCH (FIG. 7B), the control section 401 determines the PRBs allocated to one of the plurality of short TTIs (for example, the earliest short TTI) as DMRS-transmitting PRBs. The control section 401 may control the transmission signal generation section 402 so that one the DMRS of one of the plurality of short TTIs (for example, the earliest short TTI) is transmitted using the determined PRBs.

Also, when different user terminals 20 transmit PUSCHs in a plurality of short TTIs and different resource blocks can be allocated to the PUSCHs (FIG. 8A), the control section 401 may multiplex the DMRSs of the plurality of short TTIs on one DMRS symbol using combs. To be more specific, the control section 401 controls the transmission signal generation section 402 so that the DMRS of a short TTI is transmitted using a comb index that is different from those of other user terminals 20. Note that the comb index may be indicated in a predetermined field in DCI or may be determined in advance according to the sTTI.

Also, when different user terminals 20 transmit PUSCHs in a plurality of short TTIs and different resource blocks cannot be allocated to the PUSCHs (FIG. 8B), the control section 401 may multiplex the DMRSs of the plurality of short TTIs on one DMRS symbol using cyclic shifts. To be more specific, the control section 401 controls the transmission signal generation section 402 so that the DMRS of a short TTI is transmitted using a cyclic shift that is different from those of other user terminals 20. Note that which CS index is used may be indicated in a predetermined field (for example, the CS/OCC field) in DCI.

For the control section 401, a controller, a control circuit or a control device that can be described based on common understanding of the technical field to which the present invention pertains can be used.

In the transmission signal generation section 402, uplink signals (including uplink data signals, uplink control signals, etc.) are generated (including, for example, encoding, rate matching, puncturing, modulation, etc.) based on commands from the control section 401, and output to the mapping section 403. For example, the transmission signal generation section 402 generates the PUSCH including uplink data, the PUSCH including uplink data, and UCI (at least one of HARQ-ACK, CQI/PMI, and RI), and the PUSCH including UCI.

To be more specific, when the same user terminal 20 transmits the PUSCH in a plurality of short TTIs (FIGs. 7A and 7B), the transmission signal generation section 402 generates a DMRS using the CS index and/or the OCC indicated in the DCI of one short TTI (for example, the earliest short TTI).

Also, when different user terminals 20 transmit the PUSCH in a plurality of short TTIs (FIGs. 8A and 8B), the transmission signal generation section 402 generates an DMRS using the CS index and/or the OCC indicated in the DCI in a short TTI in which the user terminal 20 makes transmission.

Further, the transmission signal generation section 402 may generate the DMRS to transmit in an additional DMRS symbol using the DMRS sequence of a group (DMRS sequence index) different from the DMRS transmitted in the above one DMRS symbol.

For the transmission signal generation section 402, a signal generator, a signal generating circuit or a signal generating device that can be described based on common understanding of the technical field to which the present invention pertains can be used.

The mapping section 403 maps the UL signals (uplink control signals and/or uplink data signals) generated in the transmission signal generation section 402 to radio resources based on commands from the control section 401, and output the result to the transmitting/receiving sections 203.

To be more specific, the mapping section 403 maps the DMRS generated in the transmission signal generation section 402 to the PRBs (which may include an additional DMRS symbol) determined by the control section 401, in the one DMRS symbol. For the mapping section 403, mapper, a mapping circuit or a mapping device that can be described based on common understanding of the technical field to which the present invention pertains can be used.

The received signal processing section 404 performs the receiving process (for example, demapping, demodulation, decoding, etc.) of downlink signals (including downlink control signals and downlink data signals). The received signal processing section 404 outputs the information received from the radio base station 10, to the control section 401. The received signal processing section 404 outputs, for example, broadcast information, system information, control information by higher layer signaling such as RRC signaling, DCI, and the like, to the control section 401.

The received signal processing section 404 can be constituted by a signal processor, a signal processing circuit or a signal processing device that can be described based on common understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Measurement of the channel state may be performed for each CC.

The measurement section 405 can be constituted by a signal processor, a signal processing circuit or a signal processing device, and a measurer, a measurement circuit or a measurement device that can be described based on common understanding of the technical field to which the present invention pertains.

### (Hardware structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be implemented with one physically-integrated device, or may be implemented by connecting two physically-separate devices via radio or wire and using these multiple devices.

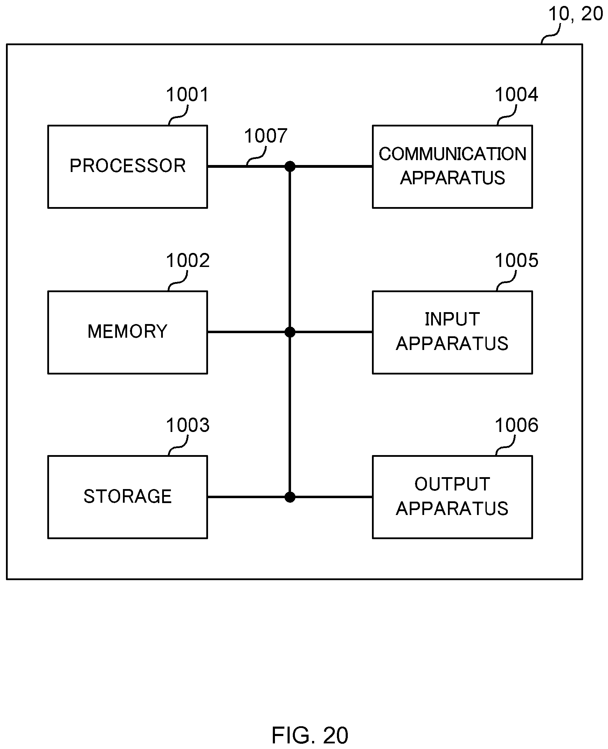

That is, a radio base station, a user terminal and so on according to an embodiment of the present invention may function as a computer that executes the processes of the radio communication method of the present invention. FIG. 20 is a diagram to show an example hardware structure of a radio base station and a user terminal according to the present embodiment. Physically, a radio base station 10 and a user terminal 20, which have been described above, may be formed as a computer apparatus that includes a processor 1001, a memory 1002, a storage 1003, a communication apparatus 1004, an input apparatus 1005, an output apparatus 1006 and a bus 1007.

Note that, in the following description, the word "apparatus" may be replaced by "circuit," "device," "unit" and so on. Note that the hardware structure of the radio base station 10 and the user terminal 20 may be designed to include one or more of each apparatus shown in the drawings, or may be designed not to include part of the apparatuses.

Each function of the radio base station 10 and user terminal 20 is implemented by reading predetermined software (programs) on hardware such as the processor 1001, the memory 1002 and so on, and controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU) including an interface with a peripheral device, a control device, a computing device, a register, and the like. For example, the above-described baseband signal process section 104 (204), the call processing section 105 and so on may be implemented by the processor 1001.

Further, the processor 1001 reads a program (program code), a software module or data from the storage 1003 and/or the communication apparatus 1004 to the memory 1002, and executes various processes according to these. As for the programs, programs to allow the computer to execute at least part of the operations of the above-described embodiments may be used. For example, the control section 401 of the user terminals 20 may be stored in memory 1002 and implemented by a control program that operates on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), a RAM (Random Access Memory) and so on. The memory 1002 may be referred to as a "register," a "cache," a "main memory" (primary storage apparatus), or the like. The memory 1002 can store executable programs (program codes), software modules and the like for implementing the radio communication methods according to present embodiment.

The storage 1003 is a computer readable recording medium, and is configured with at least one of an optical disk such as a CD-ROM (Compact Disc ROM), a hard disk drive, a flexible disk, a magneto-optical disk, a flash memory and so on. The storage 1003 may be referred to as an auxiliary storage device.

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, etc.). The output apparatus 1006 is an output device for allowing sending output to the outside (for example, a display, a speaker, etc.). Note that the input apparatus 1005 and the output apparatus 1006 may be provided in an integrated structure (for example, a touch panel).

Further, apparatuses such as the processor 1001 and the memory 1002 are connected by the bus 1007 for communicating information. The bus 1007 may be formed with a single bus, or may be formed with buses that vary between the apparatuses.

For example, the radio base station 10 and the user terminal 20 may be structured to include hardware such as an a microprocessor, an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these hardware.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "cells," "frequency carriers," "carrier frequencies" and so on.

Further, a radio frame may be comprised of one or more periods (frames) in the time domain. One or more periods (frames) constituting a radio frame may be referred to as a "subframe." Further, a subframe may be comprised of one or more slots in the time domain. Further, a slot may be comprised of one or more symbols (OFDM symbols, SC-FDMA symbols, etc.) in the time domain.

Radio frames, subframes, slots and symbols all represent time units for signal communication. Radio frames, subframes, slots and symbols may be all associated with different names. For example, one subframe may be referred to as a "transmission time interval" (TTI), or a plurality of consecutive subframes may be referred to as a "TTI," or one slot may be referred to as a "TTI." That is, a subframes and a TTI may be a subframe (one ms) in existing LTE, may be a shorter period than one ms (for example, 1 to 13 symbols), or may be a longer period than one ms.

Here, a TTI refers to the minimum time unit of scheduling in radio communication, for example. For example, in LTE systems, the radio base station performs scheduling to allocate radio resources (such as frequency bandwidth and transmission power that can be used in each user terminal) in units of TTIs to each user terminal. The definition of TTIs is not limited to this.

A resource block (RB) is a resource allocation unit in the time domain and the frequency domain, and may include one or a plurality of consecutive subcarriers in the frequency domain. Also, an RB may include one or more symbols in the time domain and may be one slot, one subframe or one TTI long. One TTI and one subframe each may be comprised of one or more resource blocks. Incidentally, an RB may be referred to as a physical resource block (PRB: Physical RB), a PRB pair, an RB pair, or the like.

Further, a resource block may be comprised of one or more resource elements (REs). For example, one RE may be a radio resource area of one subcarrier and one symbol.

Note that the structures of radio frames, subframes, slots, symbols and the like described above are merely examples. For example, configurations such as the number of subframes included in a radio frame, the number of slots included in a subframe, the number of symbols and RBs included in a slot, the number of subcarriers included in an RB, the number of symbols in a TTI, the symbol length and the cyclic prefix (CP) length can be variously changed.

Also, the information and parameters described in this description may be represented in absolute values or in relative values with respect to a predetermined value, or may be represented in other information formats. For example, radio resources may be specified by predetermined indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

Also, software, instructions, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

Further, a radio base station in this specification may be replaced by a user terminal. For example, each aspect/embodiment of the present invention may be applied to a configuration in which communication between a radio base station and a user terminal is replaced with communication between a plurality of user terminals (D2D: Device-to-Device). In this case, the user terminal 20 may have the functions of the radio base station 10 described above. In addition, wording such as "uplink" and "downlink" may be read as "side." For example, an uplink channel may be read as a side channel.

Likewise, a user terminal in this specification may be replaced by a radio base station. In this case, the radio base station 10 may have the function of the user terminal 20 described above.

The example s/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, broadcast information (MIB (Master Information Block) and SIBs (System Information Blocks)) and MAC (Medium Access Control) signaling and so on), other signals or combinations of these. Also, RRC signaling may be referred to as "RRC messages," and can be, for example, an RRC connection setup message, RRC connection reconfiguration message, and so on. Also, MAC signaling may be reported, for example, by MAC control elements (MAC CEs (Control Elements)).

The examples/embodiments illustrated in this description may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the scope of the present invention defined by the recitations of claims. Consequently, the description herein is provided only for the purpose of explaining example s, and should by no means be construed to limit the present invention in any way. construed to limit the present invention in any way.

## Claims

1. A user terminal (20) comprising:
a transmission section (203) configured to transmit uplink control information including rank indicator, RI, and Hybrid Automatic Repeat reQuest-Acknowledgement, HARQ-ACK, by using a first uplink shared channel in a first short Transmission Time Interval, sTTI, that is formed with a smaller number of symbols than a subframe; and
a control section (401) configured to control mapping of the HARQ-ACK to a symbol adjacent to a symbol to which a demodulation reference signal of the first uplink shared channel is mapped and mapping of the RI to a symbol adjacent to the symbol for the HARQ-ACK,
**characterized in that** when the first uplink shared channel is allocated to same physical resource blocks in the first sTTI, as a second uplink shared channel transmitted from a different terminal in a second sTTI sharing the symbol transmitting the demodulation reference signal with the first sTTI, mapping of the demodulation reference signal of the first uplink shared channel is configured using different cyclic shift indices.

2. A radio base station (10) comprising:
a receiving section (103) configured to receive uplink control information including rank indicator, RI, and Hybrid Automatic Repeat reQuest-Acknowledgement, HARQ-ACK, by using a first uplink shared channel in a first short Transmission Time Interval, sTTI, that is formed with a smaller number of symbols than a subframe; and
a control section (301) configured to control demapping of the HARQ-ACK to a symbol adjacent to a symbol to which a demodulation reference signal of the first uplink shared channel is mapped and mapping of the RI to a symbol adjacent to the symbol for the HARQ-ACK,
**characterized in that** when the first uplink shared channel is allocated to same physical resource blocks in the first sTTI, as a second uplink shared channel transmitted from a different terminal in a second sTTI sharing the symbol transmitting the demodulation reference signal with the first sTTI, mapping of the demodulation reference signal of the first uplink shared channel is configured using different cyclic shift indices.

## Patentansprüche

1. Benutzerendgerät (20), umfassend:
einen Übertragungsabschnitt (203), der ausgebildet ist, um Aufwärtsverbindungssteuerinformationen einschließlich Rangindikator, RI, und Hybrid Automatic Repeat Request-Acknowledgement, HARQ-ACK, unter Verwendung eines ersten gemeinsam genutzten Aufwärtsverbindungskanals in einem ersten kurzen Übertragungszeitintervall, sTTI, das mit einer geringeren Anzahl von Symbolen als ein Teilrahmen gebildet ist, zu übertragen; und
einen Steuerabschnitt (401), der ausgebildet ist, um eine Zuordnung des HARQ-ACK zu einem Symbol zu regeln, das an ein Symbol angrenzt, dem ein Demodulationsreferenzsignal des ersten gemeinsam genutzten Aufwärtsverbindungskanals zugeordnet ist, und eine Zuordnung des RI zu einem Symbol zu regeln, das an das Symbol für das HARQ-ACK angrenzt,
**dadurch gekennzeichnet, dass**, wenn der erste gemeinsam genutzte Aufwärtsverbindungskanal im ersten sTTI denselben physikalischen Ressourcenblöcken zugeordnet ist wie ein zweiter gemeinsam genutzter Aufwärtsverbindungskanal, der von einem anderen Endgerät in einem zweiten sTTI übertragen wird, das mit dem ersten sTTI das Demodulationsreferenzsignal übertragende Symbol gemeinsam nutzt, eine Zuordnung des Demodulationsreferenzsignals des ersten gemeinsam genutzten Aufwärtsverbindungskanals unter Verwendung unterschiedlicher zyklischer Verschiebungsindizes konfiguriert ist.

2. Funkbasisstation (10), umfassend:
einen Empfangsabschnitt (103), der ausgebildet ist, um Aufwärtsverbindungssteuerinformationen einschließlich Rangindikator, RI, und Hybrid Automatic Repeat Request-Acknowledgement, HARQ-ACK, unter Verwendung eines ersten gemeinsam genutzten Aufwärtsverbindungskanals in einem ersten kurzen Übertragungszeitintervall, sTTI, das mit einer geringeren Anzahl von Symbolen als ein Teilrahmen gebildet ist, zu empfangen; und
einen Steuerabschnitt (301), der ausgebildet ist, um eine Rückzuordnung des HARQ-ACK zu einem Symbol zu regeln, das an ein Symbol angrenzt, dem ein Demodulationsreferenzsignal des ersten gemeinsam genutzten Aufwärtsverbindungskanals zugeordnet ist, und eine Zuordnung des RI zu einem Symbol zu regeln, das an das Symbol für das HARQ-ACK angrenzt,
**dadurch gekennzeichnet, dass**, wenn der erste gemeinsam genutzte Aufwärtsverbindungskanal im ersten sTTI denselben physikalischen Ressourcenblöcken zugeordnet ist wie ein zweiter gemeinsam genutzter Aufwärtsverbindungskanal, der von einem anderen Endgerät in einem zweiten sTTI übertragen wird, das mit dem ersten sTTI das Demodulationsreferenzsignal übertragende Symbol gemeinsam nutzt, eine Zuordnung des Demodulationsreferenzsignals des ersten gemeinsam genutzten Aufwärtsverbindungskanals unter Verwendung unterschiedlicher zyklischer Verschiebungsindizes konfiguriert ist.

## Revendications

1. Terminal utilisateur (20) comprenant :
une section de transmission (203), configurée pour transmettre des informations de commande de liaison montante incluant un indicateur de rang, RI, et un accusé de réception de demande de répétition automatique hybride, HARQ-ACK, en utilisant un premier canal partagé de liaison montante dans un premier intervalle de temps de transmission raccourci, sTTI, qui est formé avec un nombre de symboles plus petit qu'une sous-trame ; et
une section de commande (401), configurée pour commander un mappage du HARQ-ACK sur un symbole adjacent à un symbole auquel est mappé un signal de référence de démodulation du premier canal partagé de liaison montante et un mappage de l'indicateur de rang, RI, sur un symbole adjacent au symbole pour le HARQ-ACK,
**caractérisé en ce que**, lorsque le premier canal partagé de liaison montante est alloué aux mêmes blocs de ressources physiques dans le premier sTTI, en tant qu'un deuxième canal partagé de liaison montante transmis à partir d'un terminal différent dans un deuxième sTTI partageant, avec le premier sTTI, le symbole transmettant le signal de référence de démodulation, un mappage du signal de référence de démodulation du premier canal partagé de liaison montante est configuré en utilisant des indices de décalage cyclique différents.

2. Station radio de base (10) comprenant :
une section de réception (103), configurée pour recevoir des informations de commande de liaison montante incluant un indicateur de rang, RI, et un accusé de réception de demande de répétition automatique hybride, HARQ-ACK, en utilisant un premier canal partagé de liaison montante dans un premier intervalle de temps de transmission raccourci, sTTI, qui est formé avec un nombre de symboles plus petit qu'une sous-trame ; et
une section de commande (301), configurée pour commander un démappage du HARQ-ACK sur un symbole adjacent à un symbole auquel est mappé un signal de référence de démodulation du premier canal partagé de liaison montante et un mappage du RI, sur un symbole adjacent au symbole pour le HARQ-ACK,
**caractérisé en ce que**, lorsque le premier canal partagé de liaison montante est alloué aux mêmes blocs de ressources physiques dans le premier sTTI, en tant qu'un deuxième canal partagé de liaison montante transmis à partir d'un terminal différent dans un deuxième sTTI partageant, avec le premier sTTI, le symbole transmettant le signal de référence de démodulation, un mappage du signal de référence de démodulation du premier canal partagé de liaison montante est configuré en utilisant des indices de décalage cyclique différents.
